# EUROPEAN PATENT APPLICATION

(11) **EP 4 797 762 A1**
(43) Date of publication of application: **26.08.2026**
(21) Application number: 24884685.9
(22) Date of filing: 28.10.2024
(51) Int. Cl.: H04W 16/22

(54) **COMMUNICATION METHOD AND APPARATUS**

(30) Priority: 30.10.2023 CN 202311434721
(71) Applicant: HUAWEI TECHNOLOGIES CO., LTD., Shenzhen 518129 (CN)
(72) Inventor: GUO, Tao, Shenzhen, Guangdong 518129 (CN); WU, Yizhuang, Shenzhen, Guangdong 518129 (CN); SUN, Haiyang, Shenzhen, Guangdong 518129 (CN)
(74) Representative: Thun, Clemens
(86) International application number: PCT/CN2024/127898
(87) International publication number: WO 2025/092682

(57) **Abstract**

A communication method and apparatus are provided. The method includes: A first network element sends a network element discovery message to a network repository function network element, where the network element discovery message is used to discover an analytics function network element, the network element discovery message includes a first interoperability indicator, and the first interoperability indicator includes a first vendor identifier list. The first network element receives information about one or more analytics function network elements from the network repository function network element, where an identifier of a vendor of the analytics function network element is an identifier in the first vendor identifier list. According to the foregoing method, the analytics function network element discovered by the network repository function network element for the first network element can use a model provided by a model training function network element corresponding to the first interoperability indicator, so that the first network element can select the analytics function network element as a target analytics function network element, to better provide services for a service consumer network element.

## Description

### CROSS-REFERENCE TO RELATED APPLICATIONS

This application claims priority to Chinese Patent Application No. 202311434721.9, filed with the China National Intellectual Property Administration on October 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Due to internal (for example, load balancing or graceful shutdown) or external triggering (for example, user equipment (user equipment, UE) mobility), a service consumer network element may transfer one or more analytics subscriptions from one analytics logical function (analytics logical function, AnLF) network element to another AnLF network element, in other words, from a source AnLF network element to a target AnLF network element.

Currently, the service consumer network element or the source AnLF network element needs to use a network element discovery procedure to discover the target AnLF network element, so that an analytics context of the analytics subscription that to be transferred by the source AnLF network element is transmitted to the target AnLF network element. Therefore, how to select an appropriate target AnLF network element to cause the target AnLF network element to better provide services for the service consumer network element is a problem worthy of attention.

### SUMMARY

Embodiments of this application provide a communication method and apparatus, to select an appropriate target AnLF.

According to a first aspect, this application provides a communication method. The method includes: A first model training function network element receives a model request message from a first analytics function network element, where the model request message includes an analytics identifier, and the model request message is used to request a model that provides a service corresponding to the analytics identifier. The first model training function network element sends information about a first model and first indication information to the first analytics function network element, where the first indication information includes at least one of the following: an identifier of a model training function network element that provides the information about the first model, an identifier of a first vendor, or a first interoperability indicator, the identifier of the first vendor indicates a vendor of a network element that provides the first model, and the first interoperability indicator corresponds to the analytics identifier.

According to the foregoing method, the first model training function network element may provide the information about the first model and the first indication information for the first analytics function network element, so that when determining that a new analytics function network element (or a target analytics function network element) needs to be selected, the first analytics function network element determines, based on the first indication information, a network element discovery message used to discover the analytics function network element.

For example, the model training function network element that provides the information about the first model may also be described as a network element that provides the first model, a network element that provides the information about the first model, a model training function network element that provides the first model, a model training function network element that trains the first model, a model training function network element that produces the first model, or the like. For example, the first analytics function network element may obtain the information about the first model from the first model training function network element, and may then obtain the first model based on the information about the first model. For example, the information about the first model may include a URL of the first model.

In a possible design, the first model is trained by the first model training function network element; the identifier of the model training function network element that provides the information about the first model is an identifier of the first model training function network element; the identifier of the first vendor is an identifier of a vendor of the first model training function network element; and the first interoperability indicator is an interoperability indicator corresponding to the analytics identifier of the first model training function network element. The first interoperability indicator includes a first vendor identifier list, and a vendor in the first vendor identifier list is allowed to obtain a model from the first model training function network element, or a vendor in the first vendor identifier list can obtain a model from the first model training function network element.

In a possible design, the first model is trained by a second model training function network element; the identifier of the network element that provides the information about the first model is an identifier of the second model training function network element; the identifier of the first vendor is an identifier of a vendor of the second model training function network element; the first interoperability indicator is an interoperability indicator corresponding to the analytics identifier of the second model training function network element; and the first interoperability indicator includes a first vendor identifier list, and a vendor in the first vendor identifier list is allowed to obtain a model from the second model training function network element, or a vendor in the first vendor identifier list can obtain a model from the second model training function network element.

In a possible design, the first model training function network element sends information about a second model and second indication information to the first analytics function network element, where the second model is used to provide the service corresponding to the analytics identifier, the second indication information includes at least one of the following: an identifier of a model training function network element that provides the second model, an identifier of a second vendor, or a second interoperability indicator, the identifier of the second vendor indicates a vendor of a network element that provides the second model, and the second interoperability indicator corresponds to the analytics identifier.

In a possible design, the model training function network element that provides the second model is different from the model training function network element that provides the first model; the identifier of the first vendor is different from the identifier of the second vendor; and the second interoperability indicator is an interoperability indicator corresponding to the analytics identifier of the model training function network element that provides the second model.

According to a second aspect, this application provides a communication method. The method includes:

A first network element sends a network element discovery message to a network repository function network element, where the network element discovery message is used to discover an analytics function network element, the network element discovery message includes a first interoperability indicator, and the first interoperability indicator includes a first vendor identifier list. The first network element receives information about one or more analytics function network elements from the network repository function network element, where an identifier of a vendor of the analytics function network element is an identifier in the first vendor identifier list.

According to the foregoing method, the first network element sends the network element discovery message to the network repository function network element, where the network element discovery message may include the first interoperability indicator, so that the information about the analytics function network element whose identifier of the vendor belongs to the vendor identifier list of the first interoperability indicator can be obtained from the network repository function network element. Therefore, the analytics function network element can use a model provided by a model training function network element corresponding to the first interoperability indicator, so that the first network element can select the analytics function network element as a target analytics function network element, and the target analytics function network element can better provide services for a service consumer network element.

In a possible design, a vendor in the first vendor identifier list can obtain a model from a model training function network element, or a vendor in the first vendor identifier list can retrieve or use a model provided by a model training function network element. Alternatively, a vendor in the first vendor identifier list is allowed to obtain a model from a model training function network element, or a vendor in the first vendor identifier list is allowed to retrieve or use a model provided by a model training function network element.

For example, that the vendor in the first vendor identifier list is allowed to obtain the model from the model training function network element may be understood as that the model training function network element, a vendor of the model training function network element, or a network management function entity allows the vendor in the first vendor identifier list to obtain the model from the model training function network element. The model training function network element may also be understood as a network element that produces a model, a network element that sends model information, or the like.

It may be understood that if the first interoperability indicator is an interoperability indicator corresponding to the analytics identifier of a first model training function network element or an interoperability indicator of a first model training function network element, the first interoperability indicator includes the first vendor identifier list, and the vendor in the first vendor identifier list is allowed to obtain a model from the first model training function network element. If the first interoperability indicator is an interoperability indicator corresponding to the analytics identifier of a second model training function network element or an interoperability indicator of a second model training function network element, the first interoperability indicator includes the first vendor identifier list, and the vendor in the first vendor identifier list is allowed to obtain a model from the second model training function network element.

In a possible design, the network element discovery message further includes an analytics identifier, and the analytics function network element supports provision of a service corresponding to the analytics identifier.

In a possible design, after receiving the information about the one or more analytics function network elements from the network repository function network element, the first network element selects a target function network element, where an identifier of a vendor of the target function network element is an identifier in the first vendor identifier list, and the target analytics function network element is one of the one or more analytics function network elements.

According to the foregoing design, the first network element may verify whether the identifier that is of the analytics function network element and that is provided by the network repository function network element belongs to the first vendor identifier list.

In a possible design, the first network element is the first analytics function network element; and the first analytics function network element sends an analytics subscription transfer message to the target analytics function network element, where the analytics subscription transfer message includes the analytics identifier.

In a possible design, the first network element is the first analytics function network element; and before sending the network element discovery message to the network repository function network element, the first analytics function network element sends a fourth network element discovery message to the network repository function network element, where the fourth network element discovery message is used to discover a model training function network element, and the fourth network element discovery message includes the analytics identifier; and receives information about a first model training function network element from the network repository function network element, where the information about the first model training function network element includes the first interoperability indicator, and the first interoperability indicator corresponds to the analytics identifier.

According to the foregoing design, the network repository function network element can provide the first interoperability indicator for the first analytics function network element.

In a possible design, the first network element is the first analytics function network element; and before sending the network element discovery message to the network repository function network element, the first analytics function network element sends a model request message to the first model training function network element, where the model request message includes the analytics identifier; and receives information about a first model and first indication information from the first model training function network element, where the first model is used to provide the service corresponding to the analytics identifier, the first indication information includes the first interoperability indicator, and the first interoperability indicator corresponds to the analytics identifier.

According to the foregoing design, the first model training function network element can provide the first interoperability indicator for the first analytics function network element.

In a possible design, before sending the model request message to the first model training function network element, the first analytics function network element receives a first analytics subscription message from a service consumer network element, where the first analytics subscription message includes the analytics identifier; and after receiving the information about the first model and the first indication information from the first model training function network element, the first analytics function network element provides, for the service consumer network element via the first model, the service corresponding to the analytics identifier.

In a possible design, before sending the network element discovery message to the network repository function network element, the first analytics function network element receives information about a second model and second indication information, where the second model is used to provide the service corresponding to the analytics identifier, the second indication information includes a second interoperability indicator, the second interoperability indicator corresponds to the analytics identifier, and the second interoperability indicator includes a second vendor identifier list.

In a possible design, the first network element is the service consumer network element; and the service consumer network element sends a second analytics subscription message to the target analytics function network element, where the second analytics subscription message includes the analytics identifier.

In a possible design, the first network element is the service consumer network element; and before sending the network element discovery message to the network repository function network element, the service consumer network element sends a first analytics subscription message to a first analytics function network element, where the first analytics subscription message includes the analytics identifier; and receives a first message from the first analytics function network element, where the first message is an analytics subscription response or an analytics subscription notification, the first message includes the first interoperability indicator, and the first interoperability indicator corresponds to the analytics identifier.

According to the foregoing design, the first analytics function network element can provide the first interoperability indicator for the service consumer network element.

In a possible design, the first message further includes a second interoperability indicator, the second interoperability indicator corresponds to the analytics identifier, and the second interoperability indicator includes a second vendor identifier list.

In a possible design, the network element discovery message further includes the second interoperability indicator; and the identifier of the vendor of the analytics function network element is an identifier in the second vendor identifier list.

According to the foregoing design, if the network element discovery message includes a plurality of interoperability indicators, the identifier of the vendor of the analytics function network element belongs to an intersection set of vendor identifier lists respectively corresponding to the plurality of interoperability indicators.

According to a third aspect, this application provides a communication method. The method includes:

A network repository function network element receives a network element discovery message from a first network element, where the network element discovery message includes a first interoperability indicator; and the first interoperability indicator includes a first vendor identifier list. The network repository function network element determines one or more analytics function network elements based on the first interoperability indicator, where an identifier of a vendor of the analytics function network element is an identifier in the first vendor identifier list. The network repository function network element sends information about the one or more analytics function network elements to the first network element.

According to the foregoing method, the network repository function network element receives the network element discovery message from the first network element, and determines, based on the first interoperability indicator in the network element discovery message, the one or more analytics function network elements whose identifier of the vendor belong to the vendor identifier list included in the first interoperability indicator.

In a possible design, a vendor in the first vendor identifier list can obtain a model from a model training function network element, or a vendor in the first vendor identifier list can retrieve or use a model provided by a model training function network element. Alternatively, a vendor in the first vendor identifier list is allowed to obtain a model from a model training function network element, or a vendor in the first vendor identifier list is allowed to retrieve or use a model provided by a model training function network element.

In a possible design, the network element discovery message further includes an analytics identifier, and the analytics function network element supports provision of a service corresponding to the analytics identifier.

In a possible design, the first network element is a service consumer network element or a first analytics function network element.

In a possible design, the network element discovery message further includes a second interoperability indicator, and the second interoperability indicator includes a second vendor identifier list; and the identifier of the vendor of the analytics function network element is an identifier in the second vendor identifier list.

According to a fourth aspect, this application provides a communication method. The method includes:

A first network element sends a first network element discovery message to a network repository function network element, where the first network element discovery message is used to discover an analytics function network element, and the first network element discovery message includes an identifier of a first model training function network element and an analytics identifier. The first network element receives information about one or more second analytics function network elements from the network repository function network element, where an identifier of a vendor of the second analytics function network element is an identifier in a vendor identifier list included in a first interoperability indicator, where the first interoperability indicator is an interoperability indicator corresponding to the analytics identifier of the first model training function network element.

According to the foregoing method, the first network element sends the network element discovery message to the network repository function network element, where the network element discovery message may include the identifier of the first model training function network element and the analytics identifier, so that the analytics function network element whose identifier of the vendor belongs to the vendor identifier list of the first interoperability indicator can be obtained from the network repository function network element. The first interoperability indicator is an interoperability indicator corresponding to the analytics identifier of the first model training function network element. Therefore, the analytics function network element can use a model provided by a model training function network element corresponding to the first interoperability indicator, so that the first network element can select the analytics function network element as a target analytics function network element, and the target analytics function network element can better provide services for a service consumer network element.

In a possible design, after receiving the information about the one or more second analytics function network elements from the network repository function network element, the first network element selects a target function network element, where an identifier of a vendor of the target function network element is an identifier in the first vendor identifier list, and the target analytics function network element is one of the one or more second analytics function network elements.

In a possible design, the first network element is the first analytics function network element; and the first analytics function network element sends an analytics subscription transfer message to the target analytics function network element, where the analytics subscription transfer message includes the analytics identifier.

In a possible design, the first network element is the first analytics function network element; and before sending the first network element discovery message to the network repository function network element, the first analytics function network element sends a model request message to the first model training function network element, where the model request message includes the analytics identifier; and receives information about a first model and first indication information from the first model training function network element, where the first model is used to provide a service corresponding to the analytics identifier, the first model is trained by the first model training function network element, and the first indication information includes the identifier of the first model training function network element.

According to the foregoing design, the first model training function network element can provide the identifier of the first model training function network element for the first analytics function network element.

In a possible design, before sending the model request message to the first model training function network element, the first analytics function network element receives a first analytics subscription message from a service consumer network element, where the first analytics subscription message includes the analytics identifier; and after receiving the information about the first model and the first indication information from the first model training function network element, provides, for the service consumer network element via the first model, the service corresponding to the analytics identifier.

In a possible design, before the first network element discovery message is sent to the network repository function network element, information about a second model and second indication information are received, where the second model is used to provide the service corresponding to the analytics identifier, the second model is trained by the second model training function network element, and the second indication information includes an identifier of the second model training function network element.

In a possible design, the first network element is the service consumer network element; and the service consumer network element sends a second analytics subscription message to the target analytics function network element, where the second analytics subscription message includes the analytics identifier, and the information about the second analytics function network element includes information about the target analytics function network element.

In a possible design, the first network element is the service consumer network element; and before sending the first network element discovery message to the network repository function network element, the service consumer network element sends a first analytics subscription message to a first analytics function network element, where the first analytics subscription message includes the analytics identifier; and receives a first message from the first analytics function network element, where the first message is an analytics subscription response or an analytics subscription notification, and the first message includes the identifier of the first model training function network element.

According to the foregoing design, the first analytics function network element can provide the identifier of the first model training function network element for the service consumer network element.

In a possible design, the first message further includes an identifier of a second model training function network element.

In a possible design, the first network element discovery message further includes the identifier of the second model training function network element; the identifier of the vendor of the second analytics function network element is also an identifier in a vendor identifier list included in a second interoperability indicator; and the second interoperability indicator is an interoperability indicator corresponding to the analytics identifier of the second model training function network element.

According to the foregoing design, if the first network element discovery message includes identifiers of a plurality of model training function network elements, the identifier of the vendor of the second analytics function network element belongs to an intersection set of vendor identifier lists respectively corresponding to the plurality of interoperability indicators, and the plurality of model training function network elements are in one-to-one correspondence with the plurality of interoperability indicators.

According to a fifth aspect, this application provides a communication method. The method includes:

A network repository function network element receives a first network element discovery message from a first network element, where the first network element discovery message is used to discover an analytics function network element, and the first network element discovery message includes an identifier of a first model training function network element and an analytics identifier. The network repository function network element determines one or more second analytics function network elements based on the identifier of the first model training function network element and the analytics identifier, where an identifier of a vendor of the second analytics function network element is an identifier in a vendor identifier list included in a first interoperability indicator; and the first interoperability indicator is an interoperability indicator corresponding to the analytics identifier of the first model training function network element. The network repository function network element sends information about the one or more second analytics function network elements to the first network element.

According to the foregoing method, the network repository function network element receives the network element discovery message from the first network element, and determines, based on the identifier of the first model training function network element and the analytics identifier in the network element discovery message, the one or more analytics function network elements whose identifier of the vendor belong to the vendor identifier list included in the first interoperability indicator. The first interoperability indicator is an interoperability indicator corresponding to the analytics identifier of the first model training function network element.

In a possible design, the first network element is a service consumer network element or a first analytics function network element.

In a possible design, the first network element discovery message further includes an identifier of a second model training function network element; the identifier of the vendor of the second analytics function network element is also an identifier in a vendor identifier list included in a second interoperability indicator; and the second interoperability indicator is an interoperability indicator corresponding to the analytics identifier of the second model training function network element.

According to a sixth aspect, this application provides a communication method. The method includes:

A first network element sends a third network element discovery message to a network repository function network element, where the third network element discovery message is used to discover an analytics function network element, and the third network element discovery message includes an identifier of a first vendor. The first network element receives information about one or more fourth analytics function network elements from the network repository function network element, where the fourth analytics function network element supports use of a model of a vendor in a vendor identifier list included in a first operation identifier, and the identifier of the first vendor is an identifier in the vendor identifier list.

According to the foregoing method, the first network element sends the network element discovery message to the network repository function network element, where the network element discovery message may include the identifier of the first vendor, so that the information about the one or more fourth analytics function network elements can be obtained from the network repository function network element. Because the fourth analytics function network element supports the use of the model of the vendor in the vendor identifier list included in the first operation identifier, and the identifier of the first vendor is the identifier in the vendor identifier list, it can be ensured that the fourth analytics function network element can use a model provided by the first vendor. Then, the first network element selects a target analytics function network element from the one or more fourth analytics function network elements, so that the target analytics function network element can better provide services for a service consumer network element via the model that is provided by the first vendor and that is used by a first analytics function network element.

That the fourth analytics function network element supports use of a model of a vendor in a vendor identifier list included in a first operation identifier may be understood as that the fourth analytics function network element supports use of a model provided by a model training function network element whose vendor identifier belongs to the vendor identifier list included in the first operation identifier, and the model provided by the first vendor may be understood as a model provided by the model training function network element whose vendor is the first vendor.

In a possible design, the third network element discovery message further includes an analytics identifier, the fourth analytics function network element supports provision of a service corresponding to the analytics identifier, and the first operation identifier corresponds to the analytics identifier.

In a possible design, the first network element is the first analytics function network element; and after receiving the information about the one or more fourth analytics function network elements from the network repository function network element, the first analytics function network element selects a target analytics function network element, where the target analytics function network element is one of the one or more fourth analytics function network elements; and sends an analytics subscription transfer message to the target analytics function network element, where the analytics subscription transfer message includes the analytics identifier.

In a possible design, the first network element is the first analytics function network element; and before sending the third network element discovery message to the network repository function network element, the first analytics function network element sends a model request message to a first model training function network element, where the model request message includes the analytics identifier; and receives information about a first model and first indication information from the first model training function network element, where the first model is used to provide the service corresponding to the analytics identifier, the first indication information includes the identifier of the first vendor, and the identifier of the first vendor indicates a vendor of a network element that provides the first model.

In a possible design, before sending the model request message to the first model training function network element, the first analytics function network element receives a first analytics subscription message from a service consumer network element, where the first analytics subscription message includes the analytics identifier; and after receiving the information about the first model and the first indication information from the first model training function network element, provides, for the service consumer network element via the first model, the service corresponding to the analytics identifier.

In a possible design, before sending the third network element discovery message to the network repository function network element, the first analytics function network element receives information about a second model and second indication information, where the second model is used to provide the service corresponding to the analytics identifier, the second indication information includes an identifier of a second vendor, and the identifier of the second vendor indicates a vendor of a network element that provides the second model.

In a possible design, a registration message is sent to the network repository function network element, where the registration message includes the first operation identifier of the first analytics function network element.

In a possible design, the first network element is the service consumer network element; and after receiving the information about the one or more fourth analytics function network elements from the network repository function network element, the service consumer network element selects a target analytics function network element, where the target analytics function network element is one of the one or more fourth analytics function network elements; and sends a second analytics subscription message to the target analytics function network element, where the second analytics subscription message includes the analytics identifier.

In a possible design, the first network element is the service consumer network element; and before sending the third network element discovery message to the network repository function network element, the service consumer network element sends a first analytics subscription message to a first analytics function network element, where the first analytics subscription message includes the analytics identifier; and receives a first message from the first analytics function network element, where the first message is an analytics subscription response or an analytics subscription notification, and the first message includes the identifier of the first vendor.

In a possible design, the first message further includes an identifier of a second vendor.

In a possible design, the third network element discovery message further includes the identifier of the second vendor; and the identifier of the second vendor is another identifier in the vendor identifier list.

According to a seventh aspect, this application provides a communication method. The method includes:

A network repository function network element receives a third network element discovery message from a first network element, where the third network element discovery message is used to discover an analytics function network element, and the third network element discovery message includes an identifier of a first vendor. The network repository function network element determines one or more fourth analytics function network elements based on the identifier of the first vendor, where the fourth analytics function network element supports use of a model of a vendor in a vendor identifier list included in a first operation identifier, and the identifier of the first vendor is an identifier in the vendor identifier list. The network repository function network element sends information about the one or more fourth analytics function network elements to the first network element.

According to the foregoing method, the network repository function network element receives the network element discovery message from the first network element, and determines the one or more fourth analytics function network elements based on the identifier of the first vendor in the network element discovery message, where the identifier of the vendor belongs to one or more analytics function network elements in the vendor identifier list included in the first interoperability indicator. The fourth analytics function network element supports the use of the model of the vendor in the vendor identifier list included in the first operation identifier, and the identifier of the first vendor is the identifier in the vendor identifier list. Therefore, it can be ensured that the fourth analytics function network element can use a model provided by the first vendor.

In a possible design, the third network element discovery message further includes an analytics identifier, and the first operation identifier corresponds to the analytics identifier.

In a possible design, the first network element is a service consumer network element or a first analytics function network element.

In a possible design, the third network element discovery message further includes an identifier of a second vendor; and the identifier of the second vendor is another identifier in the vendor identifier list.

In a possible design, before receiving the third network element discovery message from the first network element, the network repository function network element receives a registration message from the fourth analytics function network element, where the registration message includes the first operation identifier.

According to an eighth aspect, this application provides a communication method. The method includes:

A first network element sends a second network element discovery message to a network repository function network element, where the second network element discovery message is used to discover an analytics function network element, the second network element discovery message includes a first interoperability indicator, and the first interoperability indicator includes a first vendor identifier list. The first network element receives information about one or more third analytics function network elements from the network repository function network element, where the third analytics function network element supports use of a model of a vendor in a vendor identifier list included in a first operation identifier, where the vendor identifier list included in the first operation identifier includes the first vendor identifier list.

According to the foregoing method, the first network element sends the network element discovery message to the network repository function network element, where the network element discovery message may include the first interoperability indicator, so that the one or more third analytics function network elements can be obtained from the network repository function network element. The third analytics function network element supports the use of the model of the vendor in the vendor identifier list included in the first operation identifier, where the vendor identifier list included in the first operation identifier includes the first vendor identifier list. Therefore, the analytics function network element can use a model provided by a model training function network element corresponding to the first interoperability indicator, so that the first network element can select the analytics function network element as a target analytics function network element, and the target analytics function network element can better provide services for a service consumer network element.

In a possible design, the second network element discovery message further includes an analytics identifier, the third analytics function network element supports provision of a service corresponding to the analytics identifier, and the first operation identifier corresponds to the analytics identifier.

In a possible design, the first network element selects a target function network element, where an identifier of a vendor of the target function network element is an identifier in the first vendor identifier list, and the target analytics function network element is one of the one or more third analytics function network elements.

In a possible design, the first network element is a first analytics function network element; and the first analytics function network element sends an analytics subscription transfer message to the target analytics function network element, where the analytics subscription transfer message includes the analytics identifier, and the information about the third analytics function network element includes information about the target analytics function network element.

In a possible design, before sending the second network element discovery message to the network repository function network element, the first analytics function network element sends a fourth network element discovery message to the network repository function network element, where the fourth network element discovery message is used to discover a model training function network element, and the fourth network element discovery message includes the analytics identifier; and receives information about a first model training function network element from the network repository function network element, where the information about the first model training function network element includes the first interoperability indicator, and the first interoperability indicator corresponds to the analytics identifier.

In a possible design, the first network element is the first analytics function network element; and before sending the second network element discovery message to the network repository function network element, the first analytics function network element sends a model request message to the first model training function network element, where the model request message includes the analytics identifier; and receives information about a first model and first indication information from the first model training function network element, where the first model is used to provide the service corresponding to the analytics identifier, the first indication information includes the first interoperability indicator, and the first interoperability indicator corresponds to the analytics identifier.

In a possible design, before sending the model request message to the first model training function network element, the first analytics function network element receives a first analytics subscription message from a service consumer network element, where the first analytics subscription message includes the analytics identifier; and after receiving the information about the first model and the first indication information from the first model training function network element, provides, for the service consumer network element via the first model, the service corresponding to the analytics identifier.

In a possible design, before sending the second network element discovery message to the network repository function network element, the first analytics function network element receives information about a second model and second indication information, where the second model is used to provide the service corresponding to the analytics identifier, the second indication information includes a second interoperability indicator, the second interoperability indicator corresponds to the analytics identifier, and the second interoperability indicator includes a second vendor identifier list.

In a possible design, the first analytics function network element sends a registration message to the network repository function network element, where the registration message includes the first operation identifier of the first analytics function network element.

In a possible design, the first network element is a service consumer network element; and the service consumer network element sends a second analytics subscription message to the target analytics function network element, where the second analytics subscription message includes the analytics identifier, and the information about the third analytics function network element includes information about the target analytics function network element.

In a possible design, the first network element is a service consumer network element; and before sending the second network element discovery message to the network repository function network element, the service consumer network element sends a first analytics subscription message to a first analytics function network element, where the first analytics subscription message includes the analytics identifier; and receives a first message from the first analytics function network element, where the first message is an analytics subscription response or an analytics subscription notification, the first message includes the first interoperability indicator, and the first interoperability indicator corresponds to the analytics identifier.

In a possible design, the first message further includes a second interoperability indicator, the second interoperability indicator corresponds to the analytics identifier, and the second interoperability indicator includes a second vendor identifier list.

In a possible design, the second network element discovery message further includes the second interoperability indicator; and the vendor identifier list included in the first operation identifier further includes the second vendor identifier list.

According to a ninth aspect, this application provides a communication method. The method includes:

A network repository function network element receives a second network element discovery message from a first network element, where the second network element discovery message includes a first interoperability indicator; and the first interoperability indicator includes a first vendor identifier list. The network repository function network element determines one or more third analytics function network elements based on the first interoperability indicator, where an identifier of a vendor of the third analytics function network element is an identifier in the first vendor identifier list. The network repository function network element sends information about the one or more third analytics function network elements to the first network element.

According to the foregoing method, the network repository function network element receives the network element discovery message from the first network element, and determines the one or more third analytics function network elements based on the first interoperability indicator in the network element discovery message. The third analytics function network element supports use of a model of a vendor in a vendor identifier list included in a first operation identifier, where the vendor identifier list included in the first operation identifier includes the first vendor identifier list.

In a possible design, the second network element discovery message further includes an analytics identifier, the third analytics function network element supports provision of a service corresponding to the analytics identifier, and the first operation identifier corresponds to the analytics identifier.

In a possible design, the first network element is a service consumer network element or a first analytics function network element.

In a possible design, before receiving the second network element discovery message from the first network element, the network repository function network element receives a registration message from the third analytics function network element, where the registration message includes the first operation identifier of the third analytics function network element.

In a possible design, the second network element discovery message further includes a second interoperability indicator, and the second interoperability indicator includes a second vendor identifier list; and the vendor identifier list included in the first operation identifier further includes the second vendor identifier list.

According to a tenth aspect, this application provides a communication apparatus. The communication apparatus may be a first apparatus, may be a module or a unit (for example, a chip, a chip system, or a circuit) that is in the first apparatus and that is in one-to-one correspondence with the method/operation/step/action described in any one of the first aspect to the ninth aspect, or can be used together with the first apparatus.

According to an eleventh aspect, this application provides a communication device, including at least one processing element and at least one storage element. The at least one storage element is configured to store a program and data. The at least one processing element is configured to: read and execute the program and the data that are stored in the storage element, so that the method according to any one of the foregoing aspects of this application is implemented.

According to a twelfth aspect, this application further provides a computer program. When the computer program is run on a computer, the computer is caused to perform the method according to any one of the foregoing aspects.

According to a thirteenth aspect, this application provides a communication apparatus. The apparatus includes an interface circuit and at least one processor. The interface circuit is configured to provide input and/or output of a program or instructions for the at least one processor; and the at least one processor is configured to execute the program or the instructions, to cause the communication apparatus to implement the method according to any one of the foregoing aspects.

In a possible manner, the communication apparatus includes the at least one memory, and the at least one memory is configured to store the program or the instructions.

According to a fourteenth aspect, this application provides a computer storage medium. The storage medium stores a software program. When the software program is read and executed by one or more processors, the method according to any one of the foregoing aspects can be implemented.

According to a fifteenth aspect, this application provides a computer program product including instructions. When the instructions are run on a computer, the computer is caused to perform the method according to any one of the foregoing aspects.

According to a sixteenth aspect, this application provides a chip system. The chip system includes at least one chip and a memory. The at least one chip is configured to: read and execute a program stored in the memory, to implement the method according to any one of the foregoing aspects.

According to a seventeenth aspect, this application provides a communication system. The system includes a service consumer network element, a first analytics function network element, a network repository function network element, and a first model training function network element. The first analytics function network element and the service consumer network element perform the method according to any one of the second aspect, the fourth aspect, the sixth aspect, or the eighth aspect. The network repository function network element performs the method according to any one of the third aspect, the fifth aspect, the seventh aspect, or the ninth aspect. The model training function network element performs the method according to any design of the first aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a 5G network architecture based on a service-based architecture according to this application;
FIG. 2 is an overview flowchart 1 of a communication method according to this application;
FIG. 3 is a flowchart 1 of determining a target AnLF by a first AnLF according to this application;
FIG. 4 is a flowchart 1 of determining a target AnLF by a service consumer network element according to this application;
FIG. 5 is a flowchart 2 of determining a target AnLF by a service consumer network element according to this application;
FIG. 6 is an overview flowchart 2 of a communication method according to this application;
FIG. 7 is a flowchart 2 of determining a target AnLF by a first AnLF according to this application;
FIG. 8 is a flowchart 3 of determining a target AnLF by a service consumer network element according to this application;
FIG. 9 is a flowchart 4 of determining a target AnLF by a service consumer network element according to this application;
FIG. 10 is an overview flowchart 3 of a communication method according to this application;
FIG. 11 is a flowchart 3 of determining a target AnLF by a first AnLF according to this application;
FIG. 12 is a diagram of a structure of a communication apparatus according to this application; and
FIG. 13 is a diagram of a structure of another communication apparatus according to this application.

### DESCRIPTION OF EMBODIMENTS

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

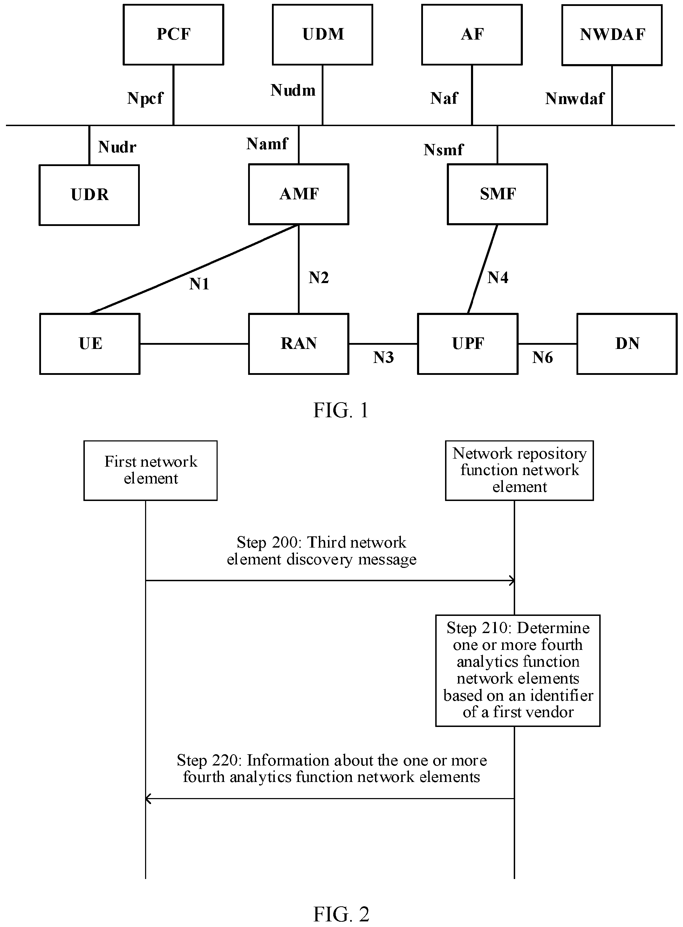

FIG. 1 is a diagram of a 5G network architecture based on a service-based architecture. The 5G network architecture shown in FIG. 1 may include a terminal device, an access network device, and a core network device. The terminal device accesses a data network (data network, DN) via the access network device and the core network device. The core network device includes a plurality of network functions (network functions, NFs) or network elements, for example, includes some or all of the following network elements: a unified data management (unified data management, UDM) network element, a unified data repository (unified data repository, UDR) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network data analytics function (network data analytics function, NWDAF) network element, a network repository function (network repository function, NRF) network element (not shown in the figure), and the like.

The access network device may be a radio access network (radio access network, RAN) device, for example, a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, or an access node in a wireless fidelity (wireless fidelity, Wi-Fi) system; or may be a module or unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

The access network device and the terminal device may be at fixed locations, or may be movable. The access network device and the terminal device may be deployed on land, including an indoor device or an outdoor device, a handheld device, or a vehicle-mounted device; or may be deployed on a water surface; or may be deployed on a plane, a balloon, and a satellite in the air. Application scenarios of the access network device and the terminal device are not limited in embodiments of this application.

The following briefly describes some core network devices.

The AMF network element, AMF for short, includes functions such as mobility management, and access authentication/authorization. In addition, the AMF is also responsible for transferring a user policy between the terminal device and the PCF.

The SMF network element, SMF for short, includes functions such as execution of session management, execution of a control policy delivered by the PCF, UPF selection, and internet protocol (internet protocol, IP) address allocation for the terminal device.

The UPF network element, UPF for short, is used as an interface to the data network, and includes functions such as completion of user plane data forwarding, session/flow-level based charging statistics collection, and bandwidth limitation.

The UDM network element, UDM for short, includes functions such as execution of subscription data management, and user access authorization.

The UDR network element, UDR for short, includes functions such as storage and retrieval of subscription data, policy data, application data, and other types of data.

The NEF network element, NEF for short, is configured to support exposure of capabilities and events.

The AF network element, AF for short, transfers a requirement of an application side for a network side, for example, a quality of service (quality of service, QoS) requirement or user status event subscription. The AF may be a third-party functional entity or an application server deployed by an operator.

The PCF network element, PCF for short, includes policy control functions such as being responsible for charging at a session or service flow level, QoS bandwidth guarantee, mobility management, and terminal device policy decision-making.

The NRF network element, NRF for short, may be configured to: provide a network element discovery function, and provide, based on a request of another network element, network element information corresponding to a network element type. The NRF network element further provides a network element management service, for example, registration, update, and deregistration of a network element and subscription and push of a network element status.

The NWDAF network element, NWDAF for short, is mainly configured to: collect data (including one or more of terminal device data, access network device data, core network element data, and third-party application device data), where the data may be data of a terminal device, an access network device, a core network element, or a third-party application device, or may be data of the terminal device on the access network device, the core network element, or the third-party application device; and then perform data analytics based on the collected data, and output a data analytics result, for a network, a network management device, and an application to make a policy decision. The NWDAF may perform data analytics by using a machine learning model. In embodiments of this application, the NWDAF may be an independent network element, or may be co-located with another network element. For example, the NWDAF is disposed in the PCF network element or the AMF network element.

In the 3rd generation partnership project (3rd generation partnership project, 3GPP) release (Release) 17, a training function and an inference function of the NWDAF are split. One NWDAF may support only a model training function or a data inference function, or support both a model training function and a data inference function.

In this application, a model training function network element may be an NWDAF that supports the model training function, which may also be referred to as a training NWDAF or referred to as an NWDAF that supports a model training logical function (model training logical function, MTLF), referred to as an MTLF for short. For example, the training MTLF may perform model training based on obtained data, to obtain a trained model.

An analytics function network element may be an NWDAF that supports the data inference function, which may also be referred to as an inference NWDAF or referred to as an NWDAF that supports an analytics logical function (analytics logical function, AnLF), referred to as AnLF for short. For example, the AnLF may request a model from the MTLF via a model subscription (MLModelProvision_Subscribe) service or message. The model may be obtained by the MTLF through training based on data related to the model. Then, the AnLF may input data to the trained model, to obtain an analytics result or inference data.

It may be understood that the MTLF may be understood as an NWDAF that supports at least the model training function. In a possible implementation method, the MTLF may also support the data inference function. The AnLF may be understood as an NWDAF that supports at least the data inference function. In a possible implementation method, the AnLF may also support the model training function.

It may be understood that, the foregoing network elements are an example of an implementation. This application does not exclude that a network element or a device having a function of the foregoing network element has another name or another form in a 6G wireless communication system or an updated wireless communication system.

It may be understood that, the foregoing network elements or functions may be network elements in a hardware device, software functions running on dedicated hardware, or virtualized functions instantiated on a platform (for example, a cloud platform). In a possible implementation method, the network elements or the functions may be implemented by one device, may be jointly implemented by a plurality of devices, or may be one functional module in one device. This is not specifically limited in embodiments of this application.

In FIG. 1, Nudr, Npcf, Namf, Nudm, Nsmf, Naf, and Nnwdaf are respectively service-based interfaces provided by the UDR, the PCF, the AMF, the UDM, the SMF, the AF, and the NWDAF, and are used to invoke corresponding service-based operations.

The following describes basic technical concepts in this application.

### 1. Analytics identifier (analysis ID)

The analytics identifier may indicate an analytics business, which may also be referred to as an analytics service, briefly referred to as a service. The service is related to a model, in other words, a model may be used to execute the service. Alternatively, this is described as that the analytics identifier is related to a model, in other words, a model is used to execute a service corresponding to the analytics identifier.

Alternatively, it may be understood as that an MTLF is related to the analytics identifier, in other words, a model provided by an MTLF is used to support execution of a service corresponding to the analytics identifier. For example, the MTLF may be related to one or more analytics identifiers. It may be understood as that the MTLF may provide a model of a service corresponding to each of the one or more analytics identifiers. For example, if an MTLF 1 is related to an analytics identifier 1 and an analytics identifier 2, in other words, an MTLF 1 corresponds to an analytics identifier 1 and an analytics identifier 2, the MTLF 1 may provide a model of a service corresponding to the analytics identifier 1 and a model of a service corresponding to the analytics identifier 2.

### 2. Vendor identifier (vendor ID)

The vendor identifier may identify a device vendor. One vendor identifier may correspond to one or more network elements (NFs), for example, an NWDAF or an NWDAF including an MTLF. For example, an MTLF 1 and an MTLF 2 correspond to a vendor identifier 1, in other words, an MTLF 1 and an MTLF 2 belong to a same vendor, and a vendor identifier of the vendor is the vendor identifier 1.

For an NF, a vendor identifier corresponds to a vendor of the network element. The vendor identifier may also be understood as network element information (NF information), and the network element information identifies vendor information (vendor) of a network element.

### 3. Interoperability indicator (interoperability indicator)

For example, the interoperability indicator may correspond to an MTLF, or correspond to an analytics identifier, or correspond to an analytics identifier of an MLTF. Alternatively, this is described as that the interoperability indicator is related to an MTLF, or the interoperability indicator is related to an analytics identifier. The interoperability indicator may also be referred to as an interoperability indication, a machine learning (machine learning, ML) model interoperability indicator, or a model interoperability indicator (ML Model interoperability Indicator).

The interoperability indicator includes a vendor list or a vendor identifier list, which is also described as an NWDAF provider (or supplier) list. A vendor in a first vendor identifier list is allowed to obtain a model from an MTLF, a vendor in a vendor identifier list is allowed to retrieve or use a model provided by an MTLF, a vendor in a first vendor identifier list can obtain a model from an MTLF, or a vendor in a vendor identifier list can retrieve or use a model provided by an MTLF. The interoperability indicator also indicates that the MTLF supports an NWDAF whose vendor is a vendor in the vendor identifier list in requesting a model provided by the MTLF.

For example, an analytics identifier 1 is related to a model 1, in other words, a model 1 is used to execute a service corresponding to the analytics identifier 1. The analytics identifier 1 is related to an interoperability indicator 1, in other words, the model 1 is related to the interoperability indicator 1. It is assumed that the interoperability indicator 1 includes an identifier of a vendor 1 and an identifier of a vendor 2, in other words, the model 1 can be provided for a vendor 1 and a vendor 2 to use. Alternatively, it may be understood as that if a vendor of an NWDAF is a vendor 1 or a vendor 2, the NWDAF may use the model 1.

For example, one MTLF may have one or more interoperability indicators. If there are a plurality of interoperability indicators, the plurality of interoperability indicators may correspond to different analytics identifiers. For example, an MTLF 1 corresponds to an analytics identifier 1 and an analytics identifier 2, where an interoperability indicator 1 corresponds to the analytics identifier 1, and an interoperability indicator 2 corresponds to the analytics identifier 2.

In addition, this application further provides a new operation identifier, which is referred to as a first operation identifier below.

For example, the first operation identifier corresponds to an AnLF, in other words, the first operation identifier is at an AnLF granularity.

Alternatively, the first operation identifier corresponds to an analytics identifier, in other words, the first operation identifier is at an analytics identifier granularity.

In a possible implementation, if the first operation identifier corresponds to the AnLF, one AnLF corresponds to one first operation identifier. The first operation identifier includes a vendor identifier list (or a vendor list), which is also described as an NWDAF provider (or supplier) list. The AnLF allows retrieval or use of a model provided by a vendor in the vendor identifier list, or the AnLF allows acquisition of a model from a vendor in the vendor identifier list. The first operation identifier also indicates that the AnLF supports use of a model provided by a network element (for example, an NWDAF) whose vendor is a vendor in the vendor identifier list. That is, for each analytics identifier, the first operation identifier is applicable.

For example, the first operation identifier includes an identifier of a vendor 1 and an identifier of a vendor 2, in other words, the AnLF can use a model provided by a vendor 1 and a model provided by a vendor 2. Alternatively, it may be understood as that if a vendor of an MTLF 1 is the vendor 1 or the vendor 2, the AnLF may use a model trained by the MTLF 1. For example, assuming that a model provided by the vendor 1 includes a model corresponding to an analytics identifier 1 and a model corresponding to an analytics identifier 2, the AnLF may use the two models.

It may be understood that the model provided by the vendor 1 may be understood as a model produced (or trained) by the vendor 1 or a model produced (or trained) by the MTLF, and the vendor of the MTLF is the vendor 1.

In another possible implementation, if the first operation identifier corresponds to the analytics identifier, one AnLF may correspond to one or more first operation identifiers. Different first operation identifiers correspond to different analytics identifiers. A first operation identifier corresponding to a first analytics identifier includes a vendor identifier list (or a vendor list), which is also described as an NWDAF provider (or supplier) list. The AnLF allows retrieval or use of a model provided by a vendor in the vendor identifier list, or the AnLF allows acquisition of a model from a vendor in the vendor identifier list. The first operation identifier also indicates that the AnLF supports use of a model provided by a network element (for example, an NWDAF) whose vendor is a vendor in the vendor identifier list. In addition, these models correspond to the first analytics identifier.

For example, it is assumed that the first operation identifier of the AnLF includes a first operation identifier corresponding to an analytics identifier 1 and a first operation identifier corresponding to an analytics identifier 2. The first operation identifier corresponding to the analytics identifier 1 includes an identifier of a vendor 1 and an identifier of a vendor 2, in other words, the AnLF can use a model provided by a vendor 1 and a model provided by a vendor 2, and the models correspond to the analytics identifier 1. For example, assuming that the model provided by the vendor 1 includes the models corresponding to the analytics identifier 1 and a model corresponding to the analytics identifier 2, the AnLF may use the models corresponding to the analytics identifier 1, but cannot use the model corresponding to the analytics identifier 2. The first operation identifier corresponding to the analytics identifier 2 includes an identifier of a vendor 4, in other words, the AnLF can use a model provided by the vendor 4, and the model corresponds to the analytics identifier 2. For example, assuming that the model provided by the vendor 4 includes the models corresponding to the analytics identifier 1 and the model corresponding to the analytics identifier 2, the AnLF may use the model corresponding to the analytics identifier 2, but cannot use the models corresponding to the analytics identifier 1.

For example, the AnLF sends a registration message to an NRF, where the registration message includes a first operation identifier. The first operation identifier includes a vendor identifier list, that is, includes one or more vendor identifiers. The NRF may store the first operation identifier in NF information (profile) of the AnLF.

Currently, a service consumer network element or a source AnLF network element needs to use a network element discovery procedure to discover a target AnLF network element. However, the NRF does not know producer information of a model being used by the source AnLF network element, and consequently, the NRF cannot accurately select a target AnLF network element that supports use of the model being used by the source AnLF. As a result, the target AnLF network element may not be capable of using an analytics context obtained from the source AnLF network element, or it may be understood as that it cannot be ensured that the AnLF network element discovered in the network element discovery procedure supports use of the analytics context obtained from the source AnLF network element. Consequently, the analytics context fails to be transferred, continuity of an analytics service is affected, and a network fault is caused.

Alternatively, it may be understood as that the source AnLF network element does not know producer information of a model provided by an MTLF, and consequently, cannot accurately select a target AnLF network element that supports use of a model used by the source AnLF. As a result, the target AnLF network element may not be capable of using the model that is used by the source AnLF network element, in other words, it cannot be ensured that the service consumer network element or the source AnLF network element selects a target AnLF network element that supports use of model information included in an analytics context. Consequently, the analytics context fails to be transferred, continuity of an analytics service is affected, and a network fault is caused.

Based on the network system architecture shown in FIG. 1 and the content described in the foregoing related technologies, embodiments of this application provide several possible communication methods.

This application provides a communication method. As shown in FIG. 2, the method includes the following steps.

Step 200: A first network element sends a third network element discovery message to a network repository function network element. Correspondingly, the network repository function network element receives the third network element discovery message from the first network element.

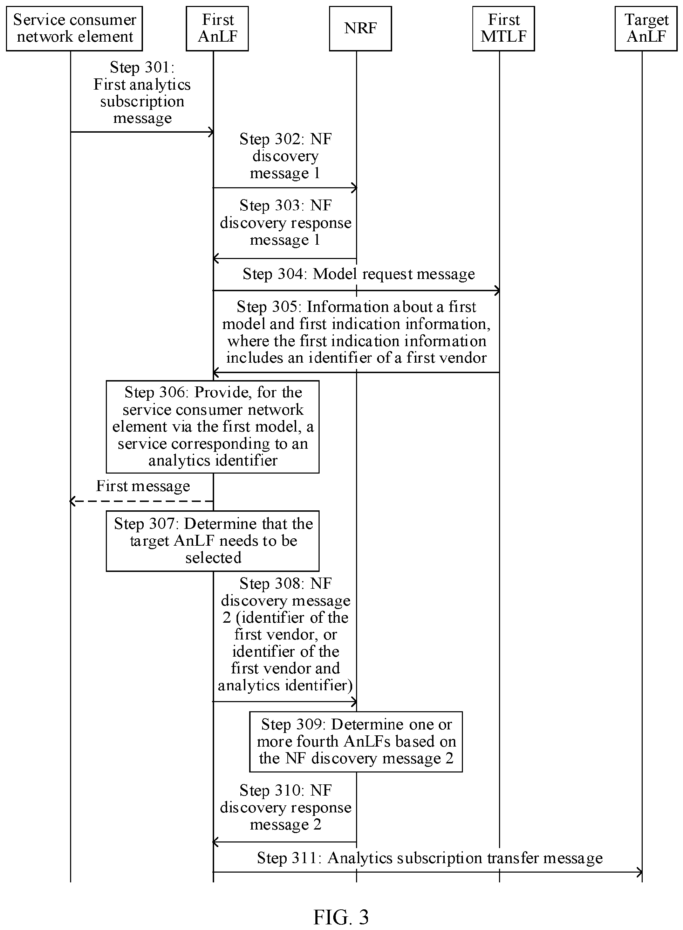

The third network element discovery message includes an identifier of a first vendor, or an identifier of a first vendor and an analytics identifier. For how the first network element learns of the identifier of the first vendor and the analytics identifier, refer to the following related steps shown in FIG. 3, FIG. 4, and FIG. 5.

The third network element discovery message is used to discover an analytics function network element. For example, the third network element discovery message includes an expected service name (service name). The expected service name may be used to determine a network element that requests to be discovered. For example, when the expected service name included in the third network element discovery message is an analytics subscription (Nnwdaf_AnalyticsSubscription_Subscribe service operation), the third network element discovery message is used to discover the analytics function network element.

Step 210: The network repository function network element determines one or more fourth analytics function network elements based on the identifier of the first vendor.

In a possible implementation, the network repository function network element determines the one or more fourth analytics function network elements based on the identifier of the first vendor.

The fourth analytics function network element supports use of a model of a vendor in a vendor identifier list included in a first operation identifier, and the identifier of the first vendor is an identifier in the vendor identifier list. In a possible implementation method, if the third network element discovery message may further include an identifier of a second vendor, the identifier of the second vendor is also an identifier in the vendor identifier list.

Alternatively, this may be described as that the network repository function network element determines the analytics function network element whose first operation identifier includes the identifier of the first vendor.

For example, assuming that the third network element discovery message includes an identifier of a vendor 1, if a first operation identifier of an analytics function network element includes the identifier of the vendor 1, the network repository function network element determines that the analytics function network element is the analytics function network element that the first network element requests to discover. In addition, the first operation identifier may further include an identifier of another vendor, for example, an identifier of a vendor 2. This is not limited in this application.

For another example, assuming that the third network element discovery message includes an identifier of a vendor 1, if a first operation identifier of an analytics function network element does not include the identifier of the vendor 1, the network repository function network element determines that the analytics function network element is not the analytics function network element that the first network element requests to discover. For another example, assuming that the third network element discovery message includes an identifier of a vendor 1 and an identifier of a vendor 2, if a first operation identifier of an analytics function network element includes the identifier of the vendor 1 and the identifier of the vendor 2, the network repository function network element determines that the analytics function network element is the analytics function network element that the first network element requests to discover.

In addition, the first operation identifier may further include an identifier of another vendor.

In another possible implementation, the network repository function network element may determine the one or more fourth analytics function network elements based on the identifier of the first vendor and the analytics identifier.

The one or more fourth analytics function network elements corresponds to one or more first operation identifiers. Different first operation identifiers correspond to different analytics identifiers. In the one or more first operation identifiers, a first operation identifier corresponding to the analytics identifier in the third network element discovery message includes a vendor identifier list, the fourth analytics function network element supports use of a model of a vendor in the vendor identifier list, and such models correspond to the analytics identifier. The identifier of the first vendor is an identifier in the vendor identifier list. In a possible implementation method, if the third network element discovery message may further include an identifier of a second vendor, the identifier of the second vendor is also an identifier in the vendor identifier list.

Alternatively, this may be described as that the analytics function network element determined by the network repository function network element supports provision of a service corresponding to the analytics identifier, and the first operation identifier corresponding to the analytics identifier includes the identifier of the first vendor.

For example, assuming that the third network element discovery message includes an identifier of a vendor 1 and an analytics identifier 1, if an analytics function network element supports provision of a service corresponding to the analytics identifier 1, and a first operation identifier corresponding to the analytics identifier 1 includes the identifier of the vendor 1, the network repository function network element determines that the analytics function network element is the analytics function network element that the first network element requests to discover. In addition, the first operation identifier may further include an identifier of another vendor, for example, an identifier of a vendor 2. This is not limited in this application.

For another example, assuming that the third network element discovery message includes an identifier of a vendor 1 and an analytics identifier 1, if an analytics function network element does not support provision of a service corresponding to the analytics identifier 1, or if an analytics function network element supports provision of a service corresponding to the analytics identifier 1, but a first operation identifier corresponding to the analytics identifier 1 does not include the identifier of the vendor 1, the network repository function network element determines that the analytics function network element is not the analytics function network element that the first network element requests to discover.

For another example, assuming that the third network element discovery message includes an identifier of a vendor 1, an identifier of a vendor 2, and an analytics identifier 1, if an analytics function network element supports provision of a service corresponding to the analytics identifier 1, and a first operation identifier corresponding to the analytics identifier 1 includes the identifier of the vendor 1 and the identifier of the vendor 2, the network repository function network element determines that the analytics function network element is the analytics function network element that the first network element requests to discover. In addition, the first operation identifier may further include an identifier of another vendor.

Step 220: The network repository function network element sends information about the one or more fourth analytics function network elements to the first network element. Correspondingly, the first network element receives the information about the one or more fourth analytics function network elements from the network repository function network element.

For example, the information about the fourth analytics function network element may be an NF profile of the fourth analytics function network element.

According to the foregoing method, the first network element includes the identifier of the first vendor, or the identifier of the first vendor and the analytics identifier in the third network element discovery message, so that the network repository function network element may determine the one or more fourth analytics function network elements based on the third network element discovery message, and sends the information about the one or more fourth analytics function network elements to the first network element. The fourth analytics function network element supports the use of the model of the vendor in the vendor identifier list included in the first operation identifier, and the identifier of the first vendor is the identifier in the vendor identifier list. Therefore, it can be ensured that the fourth analytics function network element can use a model provided by the first vendor. Then, the first network element selects a target analytics function network element from the one or more fourth analytics function network elements, so that the target analytics function network element can better provide services for a service consumer network element via the model that is provided by the first vendor and that is used by a first analytics function network element.

That the fourth analytics function network element supports use of a model of a vendor in a vendor identifier list included in a first operation identifier may be understood as that the fourth analytics function network element supports use of a model provided by a model training function network element whose vendor identifier belongs to the vendor identifier list included in the first operation identifier, and the model provided by the first vendor may be understood as a model provided by the model training function network element whose vendor is the first vendor.

For example, the first network element may be a first analytics function network element (or referred to as a source analytics function network element) or a service consumer network element. The following separately provides descriptions with reference to embodiments shown in FIG. 3, FIG. 4, and FIG. 5. The following uses an example in which the analytics function network element is an AnLF, the model training function network element is an MTLF, and the network repository function network element is an NRF for description.

As shown in FIG. 3, if the first network element is a first AnLF, a process in which the first AnLF determines a target AnLF is specifically as follows.

Step 301: A service consumer network element sends a first analytics subscription message to the first AnLF. The first analytics subscription message includes an analytics identifier.

For example, the analytics subscription message may be Nnwdaf_AnalyticsSubscription_Subscribe.

The service consumer network element requests, via the first analytics subscription message, a service corresponding to the analytics identifier. For example, the service consumer network element may be an AMF, an SMF, or another core network element.

Step 302: The first AnLF sends an NF discovery message 1 to the NRF. The NF discovery message 1 includes the analytics identifier.

For example, the NF discovery message may be Nnrf_NF Discovery. The NF discovery message 1 is used to discover an MTLF, or is used to discover an NWDAF including an MTLF. For example, the NF discovery message 1 may include an expected service name, and the expected service name is ML model provision (Nnwdaf_MLModelProvision) or ML model information (Nnwdaf_MLModelInfo).

Step 303: The NRF sends an NF discovery response message 1 to the first AnLF.

For example, the NF discovery response message 1 includes information about a first MTLF, and the information about the first MTLF may include at least one of the following: an identifier of the first MTLF, an analytics identifier, and a first interoperability indicator. The first interoperability indicator is an interoperability indicator corresponding to the analytics identifier of the first MTLF. For example, the information about the first MTLF is an NF profile of the first MTLF.

In a possible implementation method, the NRF may determine, based on the expected service name in the NF discovery message 1, that an MTLF needs to be discovered, and the NRF may store a plurality of groups of association relationships between analytics identifiers and MTLFs. The NRF queries the association relationships based on the analytics identifier in the NF discovery message 1, to determine one or more MTLFs. In this case, the NF discovery response message 1 may include information about the one or more MTLFs. The first MTLF may be understood as any one of the one or more MTLFs.

For example, the NRF stores the association relationships between the plurality of groups of analytics identifiers and the MTLFs, respectively as follows: an MTLF 1 and an MTLF 2 correspond to an analytics identifier 1, the MTLF 2 and an MTLF 3 correspond to an analytics identifier 2, and an MTLF 4 corresponds to an analytics identifier 3. If the NF discovery message includes the analytics identifier 1, the NPR determines the MTLF 1 and the MTLF 2. The NRF sends the NF discovery response message 1 to the first AnLF, where the NF discovery response message 1 includes information about the MTLF 1 and information about the MTLF 2.

Step 304: The first AnLF sends a model request message to the first MTLF. The model request message includes the analytics identifier.

For example, the model request message is a model provision subscribe (Nnwdaf_MLModelProvision_Subscribe) message. The model request message is used to request to provide a model of a service corresponding to the analytics identifier.

In a possible implementation method, the first AnLF sends, based on the received NF discovery response message 1, the model request message to any one or more MTLFs of the MTLF indicated by the NF discovery response message 1. The following merely uses an example in which the first AnLF sends the model request message to the first MTLF for description.

For example, if the NF discovery response message 1 includes an identifier of the MTLF 1 and an identifier of the MTLF 2, the first AnLF may send the model request message to the MTLF 1 and/or the MTLF 2.

Step 305: The first MTLF sends information about a first model and first indication information to the first AnLF.

For example, the first MTLF sends a model provision notify (Nnwdaf_MLModelProvision_Notify) message to the first AnLF, where the model provision notify message includes the information about the first model and the first indication information. The first model is used to provide the service corresponding to the analytics identifier, the first indication information includes an identifier of a first vendor, and the identifier of the first vendor indicates a vendor of a network element that provides the first model. For example, if the first model is trained by the first MTLF, the identifier of the first vendor is an identifier of a vendor of the first MTLF. In addition, the first MTLF may further send an identifier of the first MTLF to the first AnLF. If the first model is trained by a second MTLF, the identifier of the first vendor is an identifier of a vendor of the second MTLF. In addition, the first MTLF may further send an identifier of the second MTLF to the first AnLF.

In a possible implementation, the model provision notify message includes a unique ML model identifier and ML model information that are associated with the analytics identifier. The ML model information includes the first indication information. In addition, the ML model information may further include an ML model file address (for example, a uniform resource locator system (uniform resource locator, URL) or a fully qualified domain name (fully qualified domain name, FQDN), or an analytics data repository function (analytics data repository function, ADRF) ID or an ADRF set (set) ID, where when the ML model information includes the ADRF ID or the ADRF set (set) ID, a storage transaction identifier (storage transaction ID) may be further included). It may be understood that the model provision notify message may further include other content. This is not limited in this application.

It may be understood that the first MTLF sends, to the first AnLF, information about at least one model and an identifier of a vendor that provides the at least one model, where the at least one model is used to provide the service corresponding to the analytics identifier. The at least one model corresponds to the analytics identifier. The at least one model may include a model trained by the first MTLT, or may include a model trained by another MTLF. That is, the first MTLF may provide a model trained by the first MTLF, or may obtain, from another MTLF, a model trained by the another MTLF. There may be one or more models trained by the first MTLF, and there may also be one or more models trained by the another MTLF.

It may be understood as that the model provided by the first MTLF, for example, the first model, may be a model generated (or trained) by the first MTLF, a model generated (or trained) by another MTLF, or a model jointly generated (or trained) by the first MTLF and another MTLF.

In an example, the first MTLF sends information about a second model and second indication information to the first AnLF, where the second model is used to provide the service corresponding to the analytics identifier, the second indication information includes an identifier of a second vendor, and the identifier of the second vendor indicates a vendor of a network element that provides the second model. The identifier of the second vendor is different from that of the first vendor. For example, if the second model is trained by the second MTLF, the identifier of the second vendor is the identifier of the vendor of the second MTLF. In addition, the first MTLF may further send the identifier of the second MTLF to the first AnLF.

Example 1: The first MTLF sends, to the first AnLF, an identifier of a model 1 and indication information 1, an identifier of a model 2 and indication information 2, an identifier of a model 3 and indication information 3, where the indication information 1, the indication information 2, and the indication information 3 each include an identifier of a vendor 1. That is, the vendor 1 provides the model 1, the model 2, and the model 3.

Example 2: The first MTLF sends, to the first AnLF, an identifier of a model 1 and indication information 1, an identifier of a model 2 and indication information 2, an identifier of a model 3 and indication information 3, where the indication information 1 and the indication information 2 each include an identifier of a vendor 1, and the indication information 3 includes an identifier of a vendor 2. That is, the vendor 1 provides the model 1 and the model 2, and the vendor 2 provides the model 3.

In addition, in a possible implementation, the model provided by the first MTLF is a model jointly trained by a plurality of vendors, and the first indication information includes at least one identifier in a list of identifiers of vendors jointly training the model.

For example, the first indication information includes the list of the identifiers of the vendors jointly training the model, or a part of identifiers of vendors in the list of the identifiers of the vendors.

For example, it is assumed that a model 1 is jointly trained by a vendor 1 and a vendor 2, and the model 1 corresponds to the analytics identifier. The first MTLF sends information about the model 1 and first indication information to the first AnLF, where the first indication information includes an identifier of the vendor 1 and an identifier of the vendor 2.

For example, it is assumed that a model 1 is jointly trained by a vendor 1, a vendor 2, and a vendor 3, and the model 1 corresponds to the analytics identifier. The first MTLF sends information about the model 1 and first indication information to the first AnLF, where the first indication information includes an identifier of at least one vendor, the identifier of the at least one vendor includes at least one of the following: an identifier of the vendor 1, an identifier of the vendor 2, or an identifier of the vendor 3.

For example, the first MTLF may determine that a consumer that supports use of a model produced by a vendor X has a capability of using a model jointly trained by a plurality of vendors. In this case, the first MTLF may provide only one or more of identifiers of the plurality of vendors, where the one or more of the identifiers of the plurality of vendors include an identifier of the vendor X.

For example, it is assumed that the model 1 is jointly trained by the vendor 1, the vendor 2, and the vendor 3. The first MTLF may determine that a consumer that supports use of a model produced by the vendor 1 has a capability of using the model jointly trained by the plurality of vendors. In this case, the first MTLF may provide only an identifier of the vendor 1.

Step 306: The first AnLF provides, for the service consumer network element via the first model, the service corresponding to the analytics identifier.

For example, the first AnLF obtains the first model based on the information about the first model, and provides, for the service consumer network element via the first model, the service corresponding to the analytics identifier.

For example, the information about the first model may include a model file address, for example, a URL, and the first AnLF may obtain the first model based on the URL. Alternatively, the information about the first model may include an ADRF ID, the first AnLF may send a model obtaining request to an ADRF identified by the ADRF ID, and the ADRF may send the first model to the first AnLF.

It may be understood that, if obtaining information about a plurality of models, the first AnLF may select at least one model from the plurality of models, to provide, for the service consumer network element, the service corresponding to the analytics identifier. A specific manner of selecting the model by the first AnLF is not limited in this application.

For example, the first AnLF provides the service for the service consumer network element via a model provided by an MTLF. Alternatively, the first AnLF provides the service for the service consumer network element by simultaneously using models provided by a plurality of MTLFs. The first AnLF may integrate prediction results of the models provided by the plurality of MTLFs, and then obtain an analytics result, to provide the service for the service consumer network element.

For example, the first AnLF further receives the information about the second model and the second indication information from the first MTLF or the second MTLF, and the first AnLF may further provide, for the service consumer network element via the second model, the service corresponding to the analytics identifier.

It can be learned from step 303 and step 304 that the first AnLF may send the model request message to at least one MTLF, to obtain information about a model separately provided by the at least one MTLF, select at least one model based on the obtained information about the model separately provided by the at least one MTLF, to provide, for the service consumer network element, the service corresponding to the analytics identifier.

Example A: If the first AnLF may obtain information about a model 1, information about a model 2, and information about a model 3 from the first MTLF, the first AnLF selects at least one of the model 1, the model 2, and the model 3 based on the information about the model 1, the information about the model 2, and the information about the model 3, to provide, for the service consumer network element, the service corresponding to the analytics identifier.

Example B: If the first AnLF may obtain information about a model 1, information about a model 2, and information about a model 3 from the first MTLF, and the first AnLF obtains information about a model 6 and information about a model 9 from the second MTLF, the first AnLF may select at least one of the model 1, the model 2, the model 3, the model 6, or the model 9 based on the information about the model 1, the information about the model 2, the information about the model 3, the information about the model 6, and the information about the model 9, to provide, for the service consumer network element, the service corresponding to the analytics identifier.

In addition, the first AnLF may further send a first message to the service consumer network element, where the first message may be an analytics subscription response and/or an analytics subscription notification.

Step 307: The first AnLF determines that the target AnLF needs to be selected.

For example, if determining, based on a network element status, that the first AnLF is in an overloaded state, or is close to or exceeds a service upper limit, or the first AnLF prepares to close or stop the provision of the service, the first AnLF determines that the target AnLF needs to be selected.

Step 308: The first AnLF sends an NF discovery message 2 to the NRF. Step 308 corresponds to step 200.

The NF discovery message 2 includes the identifier of the first vendor, or the identifier of the first vendor and the analytics identifier.

The NF discovery message 2 is used to discover an AnLF, or is used to discover an NWDAF including an AnLF. For example, the NF discovery message 2 may include an expected service name, and the expected service name is analytics subscription.

It may be understood that, if the first AnLF provides, for the service consumer network element via the first model, the service corresponding to the analytics identifier, the NF discovery message 2 includes an identifier of the vendor that provides the first model, namely, the identifier of the first vendor. If the first AnLF further provides, for the service consumer network element via another model, the service corresponding to the analytics identifier, and a vendor that provides the model is not the first vendor, the NF discovery message 2 may further include an identifier of another vendor.

For example, if the first AnLF may further provide, for the service consumer network element via the second model, the service corresponding to the analytics identifier, where a vendor that provides the second model is the second vendor, and the identifier of the second vendor is different from that of the first vendor. In this case, the NF discovery message 2 includes an identifier of the vendor that provides the second model, namely, the identifier of the second vendor.

Step 309: The NRF determines one or more fourth AnLFs based on the NF discovery message 2. Step 309 corresponds to step 210.

For example, a vendor identifier list included in a first operation identifier of the fourth AnLF includes the identifier of the first vendor.

If the NF discovery message 2 includes the identifier of the first vendor, the NRF may determine the one or more fourth AnLFs based on the identifier of the first vendor; or if the NF discovery message 2 includes the identifier of the first vendor and the analytics identifier, the NRF may determine the one or more fourth AnLFs based on the identifier of the first vendor and the analytics identifier. For details, refer to the related content in step 210. Details are not described herein again.

In addition, if the NF discovery message 2 further includes an identifier of another vendor, for example, the identifier of the second vendor, the vendor identifier list included in the first operation identifier of the fourth AnLF includes the identifier of the first vendor and/or the identifier of the second vendor.

In other words, if the NF discovery request message 2 includes identifiers of x vendors, the NRF determines that the vendor identifier list included in the first operation identifier of the AnLF includes a part or all of the identifiers of the x vendors, where x is a positive integer.

Step 310: The NRF sends an NF discovery response message 2 to the first AnLF. Step 310 corresponds to step 220.

For example, the NF discovery response message 2 includes information about the one or more fourth AnLFs.

Step 311: The first AnLF sends an analytics subscription transfer message to the target AnLF. The analytics subscription transfer message includes the analytics identifier.

For example, the first AnLF determines the target AnLF based on the received NF discovery response message 2, and sends the analytics subscription transfer message to the target AnLF.

In an example, when the NF discovery response message 2 includes information about one fourth AnLF, the first AnLF sends the analytics subscription transfer message to the fourth AnLF, where the fourth AnLF is the target AnLF.

In another example, when the NF discovery response message 2 includes information about a plurality of fourth AnLFs, the first AnLF sends the analytics subscription transfer message to the target AnLF, where the target AnLF is one of the plurality of fourth AnLFs. A specific manner in which the first AnLF determines the target AnLF from the plurality of fourth AnLFs is not limited in this application.

According to the method shown in FIG. 3, the first AnLF provides the service for the service consumer network element via the first model provided by the first vendor. When the first AnLF determines the target AnLF, the first AnLF may obtain, via the NRF, one or more AnLFs that can use the model provided by the first vendor, and determine the target AnLF from the one or more AnLFs, so that after the analytics subscription is transferred to the target AnLF, the target AnLF can better provide the service for the service consumer network element via the model provided by the first vendor. This can ensure continuity of the service.

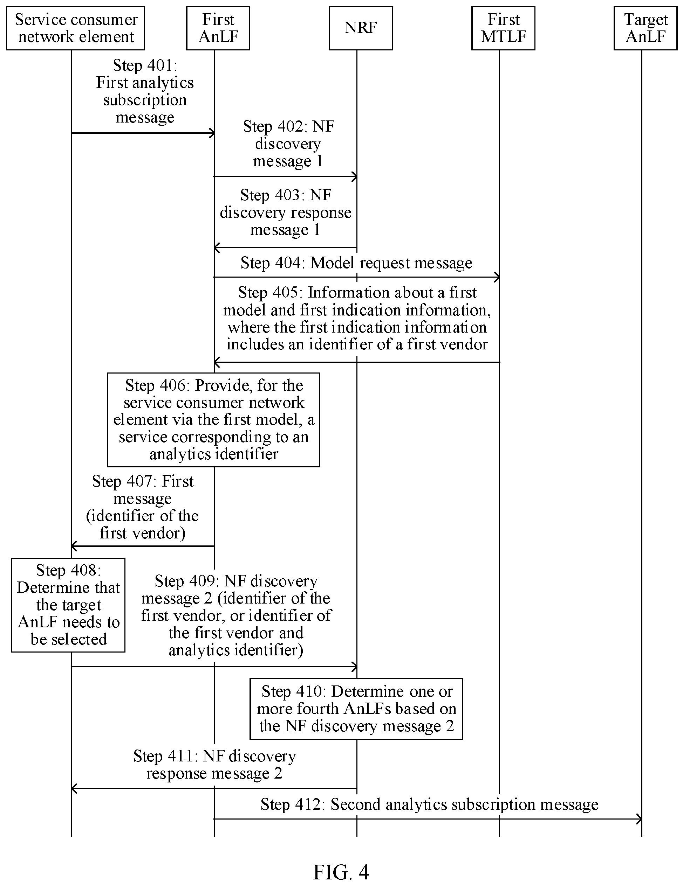

As shown in FIG. 4, if the first network element is a service consumer network element, a process in which the service consumer network element determines a target AnLF is specifically as follows.

For step 401 to step 406, refer to step 301 to step 306. Details are not described herein again.

Step 407: A first AnLF sends a first message to the service consumer network element. The first message includes an identifier of a first vendor.

For example, the first message may be an analytics subscription response and/or an analytics subscription notification.

It may be understood that, if the first AnLF provides, for the service consumer network element via a first model, a service corresponding to an analytics identifier, the first message includes an identifier of a vendor that provides the first model, namely, the identifier of the first vendor. If the first AnLF further provides, for the service consumer network element via another model, the service corresponding to the analytics identifier, and a vendor that provides the model is not the first vendor, the first message may further include an identifier of another vendor.

For example, if the first AnLF may further provide, for the service consumer network element via a second model, the service corresponding to the analytics identifier, where a vendor that provides the second model is a second vendor, and an identifier of the second vendor is different from that of the first vendor. In this case, the first message includes the identifier of the vendor that provides the second model, namely, the identifier of the second vendor.

Step 408: The service consumer network element determines that the target AnLF needs to be selected.

For example, the service consumer network element may determine, based on internal logic or an external trigger condition, that the target AnLF needs to be selected. For example, the service consumer network element starts to request related analytics, or receives a subscription termination request for existing analytics, and then selects a new AnLF to continue to serve the service consumer network element.

Step 409: The service consumer network element sends an NF discovery message 2 to an NRF. Step 409 corresponds to step 200.

The NF discovery message 2 includes the identifier of the first vendor, or the identifier of the first vendor and the analytics identifier.

The NF discovery message 2 is used to discover an AnLF, or is used to discover an NWDAF including an AnLF.

It may be understood that if the first message may further include an identifier of one or more vendors, the NF discovery message 2 further includes the identifier of the one or more vendors.

For example, the first message further includes the identifier of the second vendor. Therefore, the NF discovery message 2 further includes the identifier of the second vendor.

Step 410: The NRF determines one or more fourth AnLFs based on the NF discovery message 2. Step 410 corresponds to step 210.

For details, refer to step 309. Details are not described herein.

Step 411: The NRF sends an NF discovery response message 2 to the service consumer network element. Step 411 corresponds to step 220.

For example, the NF discovery response message 2 includes information about the one or more fourth AnLFs.

Step 412: The service consumer network element sends a second analytics subscription message to the target AnLF. The second analytics subscription message includes the analytics identifier.

For example, the service consumer network element determines the target AnLF based on the received NF discovery response message 2, and sends the second analytics subscription message to the target AnLF.

In an example, when the NF discovery response message 2 includes information about one fourth AnLF, the service consumer network element sends the second analytics subscription message to the fourth AnLF, where the fourth AnLF is the target AnLF.

In another example, when the NF discovery response message 2 includes information about a plurality of fourth AnLFs, the service consumer network element sends the second analytics subscription message to the target AnLF, where the target AnLF is one of the plurality of fourth AnLFs. A specific manner in which the service consumer network element determines the target AnLF from the plurality of fourth AnLFs is not limited in this application.

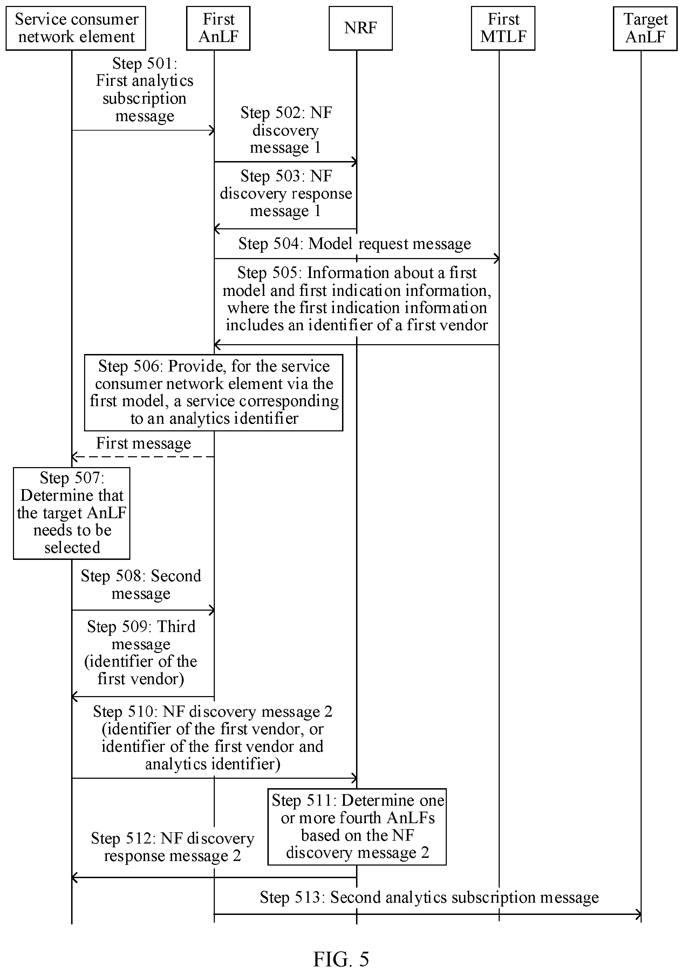

As shown in FIG. 5, if the first network element is a service consumer network element, a process in which the service consumer network element determines a target AnLF is specifically as follows.

For step 501 to step 506, refer to step 301 to step 306. Details are not described herein again.

Step 507: The service consumer network element determines that the target AnLF needs to be selected.

Step 508: The service consumer network element sends a second message to a first AnLF. The second message is used to request to provide, for the service consumer network element, an identifier of a vendor of a model with the service corresponding to the analytics identifier. The second message may also be referred to as an AnLF transfer request message.

Step 509: The first AnLF sends a third message to the service consumer network element. The third message includes the identifier of the first vendor. The third message may also be referred to as an AnLF transfer response message.

It may be understood that, if the first AnLF provides, for the service consumer network element via a first model, a service corresponding to an analytics identifier, the third message includes an identifier of a vendor that provides the first model, namely, the identifier of the first vendor. If the first AnLF further provides, for the service consumer network element via another model, the service corresponding to the analytics identifier, and a vendor that provides the model is not the first vendor, the third message may further include an identifier of another vendor.

For example, if the first AnLF may further provide, for the service consumer network element via a second model, the service corresponding to the analytics identifier, where a vendor that provides the second model is a second vendor, and an identifier of the second vendor is different from that of the first vendor. In this case, the third message includes the identifier of the vendor that provides the second model, namely, the identifier of the second vendor.

Step 510: The service consumer network element sends an NF discovery message 2 to an NRF. Step 510 corresponds to step 200.

The NF discovery message 2 includes the identifier of the first vendor, or the identifier of the first vendor and the analytics identifier.

The NF discovery message 2 is used to discover an AnLF, or is used to discover an NWDAF including an AnLF.

It may be understood that if the third message may further include an identifier of one or more vendors, the NF discovery message 2 further includes the identifier of the one or more vendors.

For example, the third message further includes the identifier of the second vendor. Therefore, the NF discovery message 2 further includes the identifier of the second vendor.

For step 511 to step 513, refer to step 410 to step 412. Details are not described herein again.

According to the method in FIG. 4 or FIG. 5, the first AnLF provides the service for the service consumer network element via the first model provided by the first vendor. When the service consumer network element determines the target AnLF, the service consumer network element may determine, via the NRF, one or more fourth AnLFs that can use the model provided by the first vendor, and determine the target AnLF from the one or more fourth AnLFs, so that after a second analytics subscription message may be sent the target AnLF, the target AnLF can better provide the service for the service consumer network element via the model provided by the first vendor. This can ensure continuity of the service.

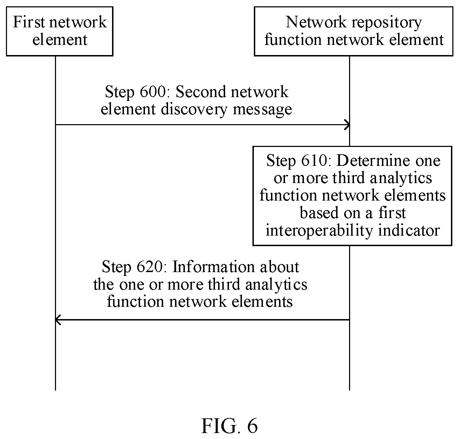

This application further provides a communication method. As shown in FIG. 6, the method includes the following steps.

Step 600: A first network element sends a second network element discovery message to a network repository function network element. Correspondingly, the network repository function network element receives the second network element discovery message from the first network element.

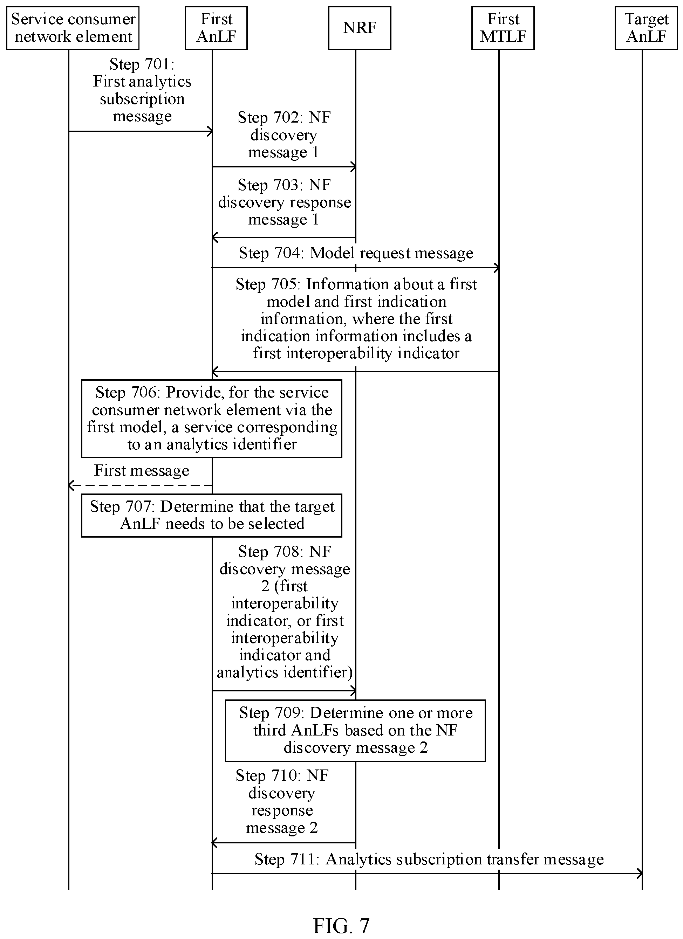

The second network element discovery message includes a first interoperability indicator, or a first interoperability indicator and an analytics identifier. The first interoperability indicator includes a vendor identifier list, and the vendor identifier list is denoted as a first vendor identifier list. For how the first network element learns of the first interoperability indicator and the analytics identifier, refer to the following related steps shown in FIG. 7, FIG. 8, and FIG. 9.

In a possible implementation method, the second network element discovery message is used to discover an analytics function network element. For example, the second network element discovery message includes an expected service name. The expected service name may be used to determine a network element that requests to be discovered. For example, when the expected service name included in the second network element discovery message is an analytics subscription, the second network element discovery message is used to discover the analytics function network element.

Step 610: The network repository function network element determines one or more third analytics function network elements based on the first interoperability indicator.

Step 620: The network repository function network element sends information about the one or more third analytics function network elements to the first network element.

For example, the information about the third analytics function network element may be an NF profile of the third analytics function network element.

For step 610, the following describes several possible implementations.

In a first possible implementation, the network repository function network element may determine the one or more third analytics function network elements based on the first interoperability indicator

The first possible implementation may specifically include but is not limited to the following two implementations:

### Possible implementation 1:

Scenario (1): The second network element discovery message includes the first interoperability indicator, that is, the second network element discovery message includes one interoperability indicator.

If the second network element discovery message includes the first interoperability indicator, and the first interoperability indicator includes the first vendor identifier list, the network repository function network element selects an analytics function network element whose identifier of a vendor belongs to the first vendor identifier list, in other words, an identifier of a vendor of a third analytics function network element is an identifier in the first vendor identifier list, or this is described as that an identifier of a vendor of a third analytics function network element belongs to the first vendor identifier list.

In addition, after the first network element receives the information about the one or more third analytics function network elements from the network repository function network element, the first network element selects a target function network element, where the target analytics function network element is one of the one or more third analytics function network elements, in other words, an identifier of a vendor of the target analytics function network element is an identifier in the first vendor identifier list, or it may be understood as that the first network element verifies whether an identifier that is of a vendor of the analytics function network element and that is provided by the network repository function network element belongs to the first vendor identifier list. For example, if information about an analytics function network element A sent by the network repository function network element includes an identifier of a vendor of the analytics function network element A, the first network element may verify whether the identifier of the vendor belongs to the first vendor identifier list. If the identifier of the vendor belongs to the first vendor identifier list, the first network element may select the analytics function network element A as the target analytics function network element. If identifiers of vendors of a plurality of analytics function network elements belong to the first vendor identifier list, the first network element may randomly select a target analytics function network element from the plurality of analytics function network elements or select a target analytics function network element from the plurality of analytics function network elements based on other information.

For example, if the second network element discovery message includes the first interoperability indicator, and it is assumed that the first interoperability indicator includes the first vendor identifier list, and the first vendor identifier list includes an identifier of a vendor 1 and an identifier of a vendor 2, the network repository function network element selects an analytics function network element whose identifier of a vendor is the identifier of the vendor 1 or the identifier of the vendor 2.

Scenario (2): The second network element discovery message may further include a second interoperability indicator, and the second interoperability indicator includes a vendor identifier list, which is denoted as a second vendor identifier list. In other words, the second network element discovery message includes the first interoperability indicator and the second interoperability indicator. It may be understood that the second network element discovery message may include one or more interoperability indicators. This is not limited in this application. The following merely uses two interoperability indicators as an example for description.

If the second network element discovery message includes the first interoperability indicator and the second interoperability indicator, the first interoperability indicator includes the first vendor identifier list, and the second interoperability indicator includes the second vendor identifier list, the network repository function network element selects an analytics function network element whose identifier of a vendor belongs to the first vendor identifier list and belongs to the second vendor identifier list, in other words, selects an analytics function network element whose identifier of a vendor belongs to an intersection set of the first vendor identifier list and the second vendor identifier list.

Alternatively, this is described as that if an identifier of a vendor of a third analytics function network element selected by the network repository function network element is an identifier in the first vendor identifier list, and the identifier of the vendor of the third analytics function network element is also an identifier in the second vendor identifier list, the identifier of the vendor of the third analytics function network element is an identifier in an intersection set of the first vendor identifier list and the second vendor identifier list.

In an example, if the first network element sends a second network element discovery message to the network repository function network element, where the second network element discovery message includes a first interoperability indicator and a second interoperability indicator, the network repository function network element determines an intersection set of a first vendor identifier list and a second vendor identifier list based on the first interoperability indicator and the second interoperability indicator. The first interoperability indicator includes the first vendor identifier list, and the second interoperability indicator includes the second vendor identifier list. The network repository function network element determines one or more third analytics function network elements based on the intersection set of the first vendor identifier list and the second vendor identifier list. An identifier of a vendor of the third analytics function network element belongs to the intersection set of the first vendor identifier list and the second vendor identifier list.

In another example, the first network element sends a second network element discovery message to the network repository function network element, where the second network element discovery message may include vendor information, and the vendor information includes an identifier of at least one vendor. For example, the identifier of the at least one vendor includes an intersection set of a first vendor identifier list and a second vendor identifier list. The first interoperability indicator includes the first vendor identifier list, and the second interoperability indicator includes the second vendor identifier list. Then, the network repository function network element determines one or more third analytics function network elements based on the vendor information, where an identifier of a vendor of the third analytics function network element belongs to the identifier of the at least one vendor included in the vendor information.

For example, it is assumed that the first interoperability indicator includes the first vendor identifier list. The first vendor identifier list includes an identifier of a vendor 1 and an identifier of a vendor 2, and the second interoperability indicator includes the second vendor identifier list. The second vendor identifier list includes the identifier of the vendor 1 and an identifier of a vendor 6.

Example A: If the first network element sends a second network element discovery message to the network repository function network element, where the second network element discovery message includes a first interoperability indicator and a second interoperability indicator, the network repository function network element determines an intersection set of a first vendor identifier list and a second vendor identifier list, where the intersection set includes an identifier of a vendor 1. The network repository function network element determines an analytics function network element whose identifier of a vendor is the identifier of the vendor 1.

Example B: If the first network element sends a second network element discovery message to the network repository function network element, where the second network element discovery message includes an intersection set of a first vendor identifier list and a second vendor identifier list, and the intersection set includes an identifier of a vendor 1, the network repository function network element determines an analytics function network element whose identifier of a vendor is the identifier of the vendor 1.

### Possible implementation 2:

Scenario (1): The second network element discovery message includes the first interoperability indicator, that is, the second network element discovery message includes only one interoperability indicator.

If the second network element discovery message includes the first interoperability indicator, and the first interoperability indicator includes the first vendor identifier list, the network repository function network element selects an analytics function network element whose vendor identifier list included in a first operation identifier includes the first vendor identifier list.

In other words, the vendor identifier list included in the first operation identifier of the third analytics function network element selected by the network repository function network element includes the first vendor identifier list. Alternatively, this may be described as that the first vendor identifier list is a subset of the vendor identifier list included in the first operation identifier of the third analytics function network element.

For example, assuming that the first interoperability indicator includes the first vendor identifier list, and the first vendor identifier list includes an identifier of a vendor 1 and an identifier of a vendor 2, if a vendor identifier list included in a first operation identifier of an analytics function network element includes the identifier of the vendor 1 and the identifier of the vendor 2, the vendor identifier list included in the first operation identifier includes the first vendor identifier list, and the network repository function network element determines that the analytics function network element is the third analytics function network element. In addition, the vendor identifier list included in the first operation identifier may further include an identifier of another vendor, for example, an identifier of a vendor 5. This is not limited in this application.

For another example, assuming that the first interoperability indicator includes the first vendor identifier list, and the first vendor identifier list includes an identifier of a vendor 1, an identifier of a vendor 4, and an identifier of a vendor 5, if a vendor identifier list included in a first operation identifier of an analytics function network element includes the identifier of the vendor 1 and an identifier of a vendor 2, the vendor identifier list included in the first operation identifier of the analytics function network element includes a case in which the first vendor identifier list is not included, and the network repository function network element determines that the analytics function network element is not the third analytics function network element.

Scenario (2): The second network element discovery message may further include a second interoperability indicator, and the second interoperability indicator includes a vendor identifier list, which is denoted as a second vendor identifier list. In other words, the second network element discovery message includes the first interoperability indicator and the second interoperability indicator. It may be understood that the second network element discovery message may include one or more interoperability indicators. This is not limited in this application. The following merely uses two interoperability indicators as an example for description.

If the second network element discovery message includes the first interoperability indicator and the second interoperability indicator, the first interoperability indicator includes a first vendor identifier list, and the second interoperability indicator includes a second vendor identifier list, the network repository function network element selects an analytics function network element whose vendor identifier list included in a first operation identifier includes the first vendor identifier list and a third vendor identifier list, or it may be further understood as that a vendor identifier list included in a first operation identifier includes a union set of the first vendor identifier list and a second vendor identifier list.

In an example, if the first network element sends a second network element discovery message to the network repository function network element, where the second network element discovery message includes a first interoperability indicator and a second interoperability indicator, the network repository function network element determines a union set of a first vendor identifier list and a second vendor identifier list based on the first interoperability indicator and the second interoperability indicator. The first interoperability indicator includes the first vendor identifier list, and the second interoperability indicator includes the second vendor identifier list. The network repository function network element determines one or more third analytics function network elements based on the union set of the first vendor identifier list and the second vendor identifier list. A vendor identifier list included in a first operation identifier of the third analytics function network element includes the union set of the first vendor identifier list and the second vendor identifier list.

In another possible implementation, the first network element sends a second network element discovery message to the network repository function network element, where the second network element discovery message may include vendor information, and the vendor information includes an identifier of at least one vendor. For example, the identifier of the at least one vendor includes a union set of a first vendor identifier list and a second vendor identifier list. The first interoperability indicator includes the first vendor identifier list, and the second interoperability indicator includes the second vendor identifier list. Then, the network repository function network element determines one or more third analytics function network elements based on the vendor information. A vendor identifier list included in a first operation identifier of the third analytics function network element includes the union set of the first vendor identifier list and the second vendor identifier list.

For example, it is assumed that the first interoperability indicator includes the first vendor identifier list. The first vendor identifier list includes an identifier of a vendor 1 and an identifier of a vendor 2, and the second interoperability indicator includes the second vendor identifier list. The second vendor identifier list includes the identifier of the vendor 1 and an identifier of a vendor 6.

Example A: If the first network element sends a second network element discovery message to the network repository function network element, where the second network element discovery message includes a first interoperability indicator and a second interoperability indicator, the network repository function network element determines a union set of a first vendor identifier list and a second vendor identifier list, where the union set includes an identifier of a vendor 1, an identifier of a vendor 2, and an identifier of a vendor 6, and the network repository function network element determines an analytics function network element whose vendor identifier list included in the first operation identifier includes the union set.

Example B: If the first network element sends a second network element discovery message to the network repository function network element, where the second network element discovery message includes a union set of a first vendor identifier list and a second vendor identifier list, and the union set includes an identifier of a vendor 1, an identifier of a vendor 2, and an identifier of a vendor 6, the network repository function network element determines that the vendor identifier list included in the first operation identifier includes the union set of analytics function network elements.

In a second possible implementation, the network repository function network element may determine one or more analytics function network elements based on the first interoperability indicator and the analytics identifier. The third analytics function network element in step 610 is any one of the one or more analytics function network elements.

The second possible implementation may specifically include but is not limited to the following two implementations:

### Possible implementation 1:

Scenario (1): The second network element discovery message includes the first interoperability indicator, that is, the second network element discovery message includes only one interoperability indicator.

If the second network element discovery message includes the first interoperability indicator and an analytics identifier, and the first interoperability indicator includes the first vendor identifier list, the network repository function network element selects an analytics function network element that supports provision of a service corresponding to the analytics identifier and whose identifier of a vendor belongs to the first vendor identifier list. In other words, it is assumed that a third analytics function network element selected by the network repository function network element supports provision of a service corresponding to the analytics identifier, and an identifier of a vendor of the third analytics function network element is an identifier in the first vendor identifier list.

For example, if the second network element discovery message includes the first interoperability indicator and an analytics identifier 1, and it is assumed that the first interoperability indicator includes the first vendor identifier list, and the first vendor identifier list includes an identifier of a vendor 1 and an identifier of a vendor 2, the network repository function network element selects an analytics function network element that supports provision of a service corresponding to the analytics identifier 1 and whose identifier of a vendor is the identifier of the vendor 1 or the identifier of the vendor 2.

Scenario (2): The second network element discovery message may further include a second interoperability indicator, and the second interoperability indicator includes a vendor identifier list, which is denoted as a second vendor identifier list. In other words, the second network element discovery message includes the first interoperability indicator and the second interoperability indicator. It may be understood that the second network element discovery message may include one or more interoperability indicators. This is not limited in this application. The following merely uses two interoperability indicators as an example for description.

If the second network element discovery message includes the first interoperability indicator, the second interoperability indicator, and an analytics identifier, the first interoperability indicator includes the first vendor identifier list, and the second interoperability indicator includes the second vendor identifier list, the network repository function network element selects an analytics function network element that supports provision of a service corresponding to the analytics identifier and whose identifier of a vendor belongs to the first vendor identifier list and belongs to the second vendor identifier list, in other words, selects an analytics function network element that supports provision of a service corresponding to the analytics identifier and whose identifier of a vendor belongs to an intersection set of the first vendor identifier list and the second vendor identifier list.

Alternatively, this is described as that if a third analytics function network element selected by the network repository function network element supports provision of a service corresponding to the analytics identifier, an identifier of a vendor of the third analytics function network element is an identifier in the first vendor identifier list, and the identifier of the vendor of the third analytics function network element is also an identifier in the second vendor identifier list, the identifier of the vendor of the third analytics function network element is an identifier in an intersection set of the first vendor identifier list and the second vendor identifier list.

In an example, if the first network element sends a second network element discovery message to the network repository function network element, where the second network element discovery message includes a first interoperability indicator, a second interoperability indicator, and an analytics identifier, the network repository function network element determines an intersection set of a first vendor identifier list and a second vendor identifier list based on the first interoperability indicator and the second interoperability indicator. The first interoperability indicator includes the first vendor identifier list, and the second interoperability indicator includes the second vendor identifier list. The network repository function network element determines one or more third analytics function network elements based on the intersection set of the first vendor identifier list and the second vendor identifier list and the analytics identifier. An identifier of a vendor of the third analytics function network element belongs to the intersection set of the first vendor identifier list and the second vendor identifier list, and provision of a service corresponding to the analytics identifier is supported.

In another example, the first network element sends a second network element discovery message to the network repository function network element, where the second network element discovery message may include vendor information and an analytics identifier, and the vendor information includes an identifier of at least one vendor. For example, the identifier of the at least one vendor includes an intersection of a first vendor identifier list and a second vendor identifier list. The first interoperability indicator includes the first vendor identifier list, and the second interoperability indicator includes the second vendor identifier list. Then, the network repository function network element determines one or more third analytics function network elements based on the vendor information and the analytics identifier, where an identifier of a vendor of the third analytics function network element belongs to the identifier of the at least one vendor included in the vendor information, and provision of a service corresponding to the analytics identifier is supported.

For example, it is assumed that the first interoperability indicator includes the first vendor identifier list. The first vendor identifier list includes an identifier of a vendor 1 and an identifier of a vendor 2, and the second interoperability indicator includes the second vendor identifier list. The second vendor identifier list includes the identifier of the vendor 1 and an identifier of a vendor 6.

Example A: If the first network element sends a second network element discovery message to the network repository function network element, where the second network element discovery message includes a first interoperability indicator, a second interoperability indicator, and an analytics identifier, the network repository function network element determines an intersection set of a first vendor identifier list and a second vendor identifier list, where the intersection set includes an identifier of a vendor 1, and the network repository function network element determines an analytics function network element that supports provision of a service corresponding to the analytics identifier 1 and whose identifier of a vendor is the identifier of the vendor 1.

Example B: If the first network element sends a second network element discovery message to the network repository function network element, where the second network element discovery message includes an intersection set of a first vendor identifier list and a second vendor identifier list and an analytics identifier, and the intersection set includes an identifier of a vendor 1, the network repository function network element determines an analytics function network element that supports provision of a service corresponding to the analytics identifier 1 and whose identifier of a vendor is the identifier of the vendor 1.

### Possible implementation 2:

Scenario (1): The second network element discovery message includes the first interoperability indicator, that is, the second network element discovery message includes only one interoperability indicator.

If the second network element discovery message includes the first interoperability indicator and an analytics identifier, and the first interoperability indicator includes the first vendor identifier list, the network repository function network element selects an analytics function network element that supports provision of a service corresponding to the analytics identifier and whose vendor identifier list included in a first operation identifier corresponding to the analytics identifier includes the first vendor identifier list. The third analytics function network element corresponds to one or more first operation identifiers, different first operation identifiers correspond to different analytics identifiers, and the one or more first operation identifiers include a first operation identifier corresponding to the analytics identifier.

In other words, if the third analytics function network element selected by the network repository function network element supports the provision of the service corresponding to the analytics identifier, the vendor identifier list included in the first operation identifier corresponding to the analytics identifier includes the first vendor identifier list. Alternatively, this may be described as that the first vendor identifier list is a subset of the vendor identifier list included in the first operation identifier corresponding to the analytics identifier.

For example, assuming that the first interoperability indicator includes the first vendor identifier list, and the first vendor identifier list includes an identifier of a vendor 1 and an identifier of a vendor 2, if an analytics function network element supports the provision of the service corresponding to the analytics identifier, and the vendor identifier list included in the first operation identifier corresponding to the analytics identifier includes the identifier of the vendor 1 and the identifier of the vendor 2, the vendor identifier list included in the first operation identifier includes the first vendor identifier list, and the network repository function network element determines that the analytics function network element is the third analytics function network element. In addition, the vendor identifier list included in the first operation identifier may further include an identifier of another vendor, for example, an identifier of a vendor 5. This is not limited in this application.

Scenario (2): The second network element discovery message may further include a second interoperability indicator, and the second interoperability indicator includes a vendor identifier list, which is denoted as a second vendor identifier list. In other words, the second network element discovery message includes the first interoperability indicator and the second interoperability indicator. It may be understood that the second network element discovery message may include one or more interoperability indicators. This is not limited in this application. The following merely uses two interoperability indicators as an example for description.

If the second network element discovery message includes the first interoperability indicator, the second interoperability indicator, and an analytics identifier, the first interoperability indicator includes the first vendor identifier list, and the second interoperability indicator includes the second vendor identifier list, the network repository function network element selects an analytics function network element that supports provision of a service corresponding to the analytics identifier and whose vendor identifier list included in a first operation identifier corresponding to the analytics identifier includes the first vendor identifier list and a third vendor identifier list. That a vendor identifier list included in the first operation identifier corresponding to the analytics identifier includes the first vendor identifier list and a third vendor identifier list may also be understood as that the vendor identifier list included in the first operation identifier corresponding to the analytics identifier includes a union set of the first vendor identifier list and the second vendor identifier list.

In an example, if the first network element sends a second network element discovery message to the network repository function network element, where the second network element discovery message includes a first interoperability indicator, a second interoperability indicator, and an analytics identifier, the network repository function network element determines a union set of a first vendor identifier list and a second vendor identifier list based on the first interoperability indicator and the second interoperability indicator. The first interoperability indicator includes the first vendor identifier list, and the second interoperability indicator includes the second vendor identifier list. The network repository function network element determines one or more third analytics function network elements based on the union set of the first vendor identifier list and the second vendor identifier list and the analytics identifier. The third analytics function network element supports provision of a service corresponding to the analytics identifier, and a vendor identifier list included in the first operation identifier corresponding to the analytics identifier includes the union set of the first vendor identifier list and the second vendor identifier list.

In another possible implementation, the first network element sends a second network element discovery message to the network repository function network element, where the second network element discovery message may include vendor information and an analytics identifier, and the vendor information includes an identifier of at least one vendor. For example, the identifier of the at least one vendor includes a union set of a first vendor identifier list and a second vendor identifier list. The first interoperability indicator includes the first vendor identifier list, and the second interoperability indicator includes the second vendor identifier list. Then, the network repository function network element determines one or more third analytics function network elements based on the vendor information and the analytics identifier. The third analytics function network element supports provision of a service corresponding to the analytics identifier, and a vendor identifier list included in the first operation identifier corresponding to the analytics identifier includes the union set of the first vendor identifier list and the second vendor identifier list.

For example, it is assumed that the first interoperability indicator includes the first vendor identifier list. The first vendor identifier list includes an identifier of a vendor 1 and an identifier of a vendor 2, and the second interoperability indicator includes the second vendor identifier list. The second vendor identifier list includes the identifier of the vendor 1 and an identifier of a vendor 6.

Example A: If the first network element sends a second network element discovery message to the network repository function network element, where the second network element discovery message includes a first interoperability indicator, a second interoperability indicator, and an analytics identifier, the network repository function network element determines a union set of a first vendor identifier list and a second vendor identifier list, where the union set includes an identifier of a vendor 1, an identifier of a vendor 2, and an identifier of a vendor 6, and the network repository function network element determines to support an analytics function network element that supports provision of a service corresponding to the analytics identifier and whose vendor identifier list included in a first operation identifier corresponding to the analytics identifier includes the union set.

Example B: If the first network element sends a second network element discovery message to the network repository function network element, where the second network element discovery message includes a union set of a first vendor identifier list and a second vendor identifier list and an analytics identifier, and the union set includes an identifier of a vendor 1, an identifier of a vendor 2, and an identifier of a vendor 6, the network repository function network element determines an analytics function network element that supports provision of a service corresponding to the analytics identifier and whose vendor identifier list included in a first operation identifier corresponding to the analytics identifier includes the union set.

In addition, it may be understood that if the network repository function network element fails to discover the third analytics function network element, the network repository function network element may further provide information about another analytics function network element.

According to the foregoing method, the first network element includes the first interoperability indicator, or the first interoperability indicator and the analytics identifier in the second network element discovery message, so that the network repository function network element may determine a candidate analytics function network element (namely, the one or more third analytics function network elements) based on the second network element discovery message, and sends information about the candidate analytics function network element to the first network element. The first network element determines a target analytics function network element based on the information about the candidate analytics function network element. The target analytics function network element can better provide services for a service consumer network element, so that continuity of the service can be ensured.

For example, if the first network element is a first analytics function network element, the first analytics function network element provides, for the service consumer network element via the first model, the service corresponding to the analytics identifier, and the first analytics function network element determines that the target analytics function network element needs to be selected, the first analytics function network element sends a second network element discovery message to the network repository function network element, where the second network element discovery message includes a first interoperability indicator, or a first interoperability indicator and the analytics identifier. The first interoperability indicator is an interoperability indicator corresponding to the analytics identifier of a model training function network element that provides information about the first model, or an interoperability indicator of a model training function network element that provides information about the first model. The following uses an example in which the first model is trained by a first model training function network element, and the first interoperability indicator is an interoperability indicator corresponding to the analytics identifier of the first model training function network element or an interoperability indicator of the first model training function network element for description.

The network repository function network element may determine a candidate analytics function network element (namely, one or more third analytics function network elements) based on the second network element discovery message, and send information about the candidate analytics function network element to the first analytics network element. The first analytics function network element determines a target analytics function network element based on the information about the candidate analytics function network element. An identifier of a vendor of the target analytics function network element belongs to the vendor identifier list of the first interoperability indicator.

Because the identifier of the vendor of the target analytics function network element belongs to the first interoperability indicator, the target analytics function network element may use a model provided by the first model training function network element, in other words, may use the first model, or it may be understood as that the target analytics function network element can use a model that is used by the first analytics function network element. Because the target analytics function network element may use the model that is used by the first analytics function network element, the target analytics function network element can better use an analytics context obtained from the first analytics function network element, and better provide, for the service consumer network element, the service corresponding to the analytics identifier.

For example, the first network element may be a first analytics function network element (or referred to as a source analytics function network element) or a service consumer network element. The following separately provides descriptions with reference to embodiments shown in FIG. 7, FIG. 8, and FIG. 9. The following uses an example in which the analytics function network element is an AnLF, the model training function network element is an MTLF, and the network repository function network element is an NRF for description.

As shown in FIG. 7, if the first network element is a first AnLF, a process in which the first AnLF determines a target AnLF is specifically as follows.

Step 701: A service consumer network element sends a first analytics subscription message to the first AnLF. The first analytics subscription message includes an analytics identifier.

For example, the analytics subscription message may be Nnwdaf_AnalyticsSubscription_Subscribe.

Step 702: The first AnLF sends an NF discovery message 1 to the NRF. The NF discovery message 1 includes the analytics identifier.

For example, the NF discovery message may be Nnrf_NF Discovery. The NF discovery message 1 is used to discover an MTLF, or is used to discover an NWDAF including an MTLF.

Step 703: The NRF sends an NF discovery response message 1 to the first AnLF.

For example, the NF discovery response message 1 includes information about a first MTLF, and the information about the first MTLF may include at least one of the following: an identifier of the first MTLF, an analytics identifier, and a first interoperability indicator. The first interoperability indicator is an interoperability indicator corresponding to the analytics identifier of the first MTLF, or an interoperability indicator of the first MTLF. For example, the information about the first MTLF is an NF profile of the first MTLF.

The NF discovery response message 1 may include information about the one or more MTLFs. The first MTLF may be understood as any one or more of the one or more MTLFs.

Step 704: The first AnLF sends a model request message to the first MTLF. The model request message includes the analytics identifier.

For example, the model request message is a model provision subscribe (Nnwdaf_MLModelProvision_Subscribe) message. The model request message is used to request to provide a model of a service corresponding to the analytics identifier.

In a possible implementation method, the first AnLF sends, based on the received NF discovery response message 1, the model request message to any one or more MTLFs of the MTLF indicated by the NF discovery response message 1. The following merely uses an example in which the first AnLF sends the model request message to the first MTLF for description.

For example, if the NF discovery response message 1 includes an identifier of the MTLF 1 and an identifier of the MTLF 2, the first AnLF may send the model request message to the MTLF 1 and/or the MTLF 2.

Step 705: The first MTLF sends information about a first model and first indication information to the first AnLF.

For example, the first MTLF sends a model provision notify message to the first AnLF, where the model provision notify message includes the information about the first model and the first indication information. The first model is used to provide the service corresponding to the analytics identifier, the first indication information includes the first interoperability indicator, and the first interoperability indicator includes a first vendor identifier list. For example, if the first model is trained by the first MTLF, the first interoperability indicator is an interoperability indicator of the first MTLF, or the first interoperability indicator is an interoperability indicator corresponding to the analytics identifier of the first MTLF. If the first model is trained by a second MTLF, the first interoperability indicator is an interoperability indicator of the second MTLF, or the first interoperability indicator is an interoperability indicator corresponding to the analytics identifier of the second MTLF.

In a possible implementation, the model provision notify message includes a unique ML model identifier and ML model information that are associated with the analytics identifier. The information about the first model is a unique ML model identifier associated with the analytics identifier, and the ML model information includes the first indication information.

It may be understood that the first MTLF sends information about at least one model to the first AnLF. The at least one model may include a model trained by the first MTLF, or may include a model trained by another MTLF. That is, the first MTLF may provide a model trained by the first MTLF, or may obtain, from another MTLF, a model trained by the another MTLF. There may be one or more models trained by the first MTLF, and there may also be one or more models trained by the another MTLF.

In an example, the first MTLF sends information about a second model and second indication information to the first AnLF, where the second model is used to provide the service corresponding to the analytics identifier, the second indication information includes a second interoperability indicator, and the second interoperability indicator includes a second vendor identifier list. For example, if the second model is trained by the second MTLF, the second interoperability indicator is an interoperability indicator of the second MTLF, or the second interoperability indicator is an interoperability indicator corresponding to the analytics identifier of the second MTLF.

Example 1: The first MTLF sends, to the first AnLF, an identifier of a model 1 and indication information 1, an identifier of a model 2 and indication information 2, an identifier of a model 3 and indication information 3, where the indication information 1, the indication information 2, and the indication information 3 each include an interoperability indicator 1. In other words, the model 1, the model 2, and the model 3 are produced by a same MTLF, and correspond to a same analytics identifier and a same interoperability indicator.

Example 2: The first MTLF sends, to the first AnLF, an identifier of a model 1 and indication information 1, an identifier of a model 2 and indication information 2, an identifier of a model 3 and indication information 3, where the indication information 1 and the indication information 2 each include an interoperability indicator 1, and the indication information 3 includes an interoperability indicator 2. In other words, the model 1 and the model 2 are produced by a same MTLF, and correspond to a same analytics identifier and a same interoperability indicator. The model 3 and the model 1 are produced by different MTLFs. Therefore, the interoperability indicators are usually different.

The following merely uses an example in which the first model is trained by the first MTLF, and the first interoperability indicator is the interoperability indicator of the first MTLF, or the first interoperability indicator is the interoperability indicator corresponding to the analytics identifier of the first MTLF for description.

Step 706: The first AnLF provides, for the service consumer network element via the first model, the service corresponding to the analytics identifier.

For details, refer to step 306. Details are not described herein again.

Step 707: The first AnLF determines that the target AnLF needs to be selected.

Step 708: The first AnLF sends an NF discovery message 2 to the NRF. Step 708 corresponds to step 600.

The NF discovery message 2 includes the first interoperability indicator, or the first interoperability indicator and the analytics identifier.

The NF discovery message 2 is used to discover an AnLF, or is used to discover an NWDAF including an AnLF.

It may be understood that, with reference to 706, it can be learned that the first AnLF provides, for the service consumer network element via the first model, the service corresponding to the analytics identifier, and the first AnLF determines an MTLF that produces (or trains) the first model. It can be learned from step 705 that the information about the first model is provided by the first MTLF. Then, the first AnLF determines the interoperability indicator of the first MTLF or the interoperability indicator corresponding to the analytics identifier of the first MTLF. It can be learned from step 703 that the NRF discovers the first MTLF for the first AnLF, and may provide the first interoperability indicator. Alternatively, it can be learned from step 705 that the first MTLF further sends the first indication information to the first AnLF, where the first indication information may include the first interoperability indicator. In other words, the first AnLF may obtain the first interoperability indicator from step 703 or step 705, and further generate the NF discovery request message 2. Certainly, the first AnLF may alternatively obtain the first interoperability indicator in another manner. For example, the first interoperability indicator is preconfigured in the first AnLF by a third party. This is not limited in this application.

If the first AnLF further provides, for the service consumer network element via another model, the service corresponding to the analytics identifier, and the model and the first model are not produced by a same MTLF, the first AnFL further needs to determine an interoperability indicator of an MTLF that produces the model. A specific method is similar to the foregoing process, and details are not described herein again. In this case, the NF discovery message 2 further includes another interoperability indicator. In other words, the NF discovery message 2 may include one or more interoperability indicators.

For example, the first AnLF may further provide, for the service consumer network element via the second model, the service corresponding to the analytics identifier, where the second model is trained by the second MTLF, and the interoperability indicator of the second MTLF or the interoperability indicator corresponding to the analytics identifier of the second MTLF is the second interoperability indicator, the NF discovery message 2 further includes the second interoperability indicator.

Step 709: The NRF determines one or more third AnLFs based on the NF discovery message 2. Step 709 corresponds to step 610.

For details, refer to 610. In addition, if the NF discovery message 2 further includes another interoperability indicator, for example, the second interoperability indicator, the NRF may determine one or more third AnLFs based on the first interoperability indicator and the second interoperability indicator, or the NRF may determine one or more third AnLFs based on the first interoperability indicator, the second interoperability indicator, and the analytics identifier.

For example, if the NF discovery message 2 includes the first interoperability indicator, an identifier of a vendor of the third AnLF belongs to the first interoperability indicator.

Step 710: The NRF sends an NF discovery response message 2 to the first AnLF. Step 710 corresponds to step 620.

For example, the NF discovery response message 2 includes information about the one or more third AnLFs.

Step 711: The first AnLF sends an analytics subscription transfer message to the target AnLF. The analytics subscription transfer message includes the analytics identifier.

For example, the first AnLF determines the target AnLF based on the received NF discovery response message 2, and sends the analytics subscription transfer message to the target AnLF.

In an example, when the NF discovery response message 2 includes information about one third AnLF, the first AnLF sends the analytics subscription transfer message to the third AnLF, where the third AnLF is the target AnLF.

In another example, when the NF discovery response message 2 includes information about a plurality of third AnLFs, the first AnLF sends the analytics subscription transfer message to the target AnLF, where the target AnLF is one of the plurality of third AnLFs. A specific manner in which the first AnLF determines the target AnLF from the plurality of third AnLFs is not limited in this application.

According to the method shown in FIG. 7, when the first AnLF determines the target AnLF, the NRF may determine the one or more third AnLFs for the first AnLF based on the first interoperability indicator or the first interoperability indicator and the analytics identifier, and the first AnLF may determine the target AnLF from the one or more third AnLFs, so that after an analytics subscription is transferred to the target AnLF, the target AnLF can better provide the service for the service consumer network element. This can ensure continuity of the service.

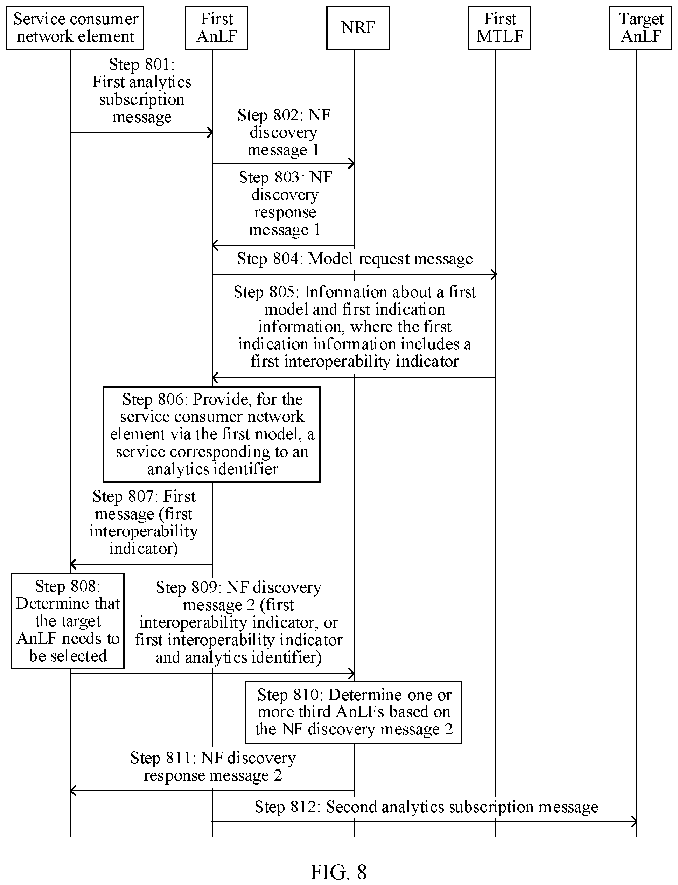

As shown in FIG. 8, if the first network element is a service consumer network element, a process in which the service consumer network element determines a target AnLF is specifically as follows.

For step 801 to step 806, refer to step 701 to step 706. Details are not described herein again.

Step 807: A first AnLF sends a first message to the service consumer network element. The first message includes a first interoperability indicator.

For example, the first message may be an analytics subscription response or an analytics subscription notification.

It may be understood that, if the first AnLF provides, for the service consumer network element via a first model, a service corresponding to an analytics identifier, the first message includes the first interoperability indicator. If the first AnLF further provides, for the service consumer network element via another model, the service corresponding to the analytics identifier, and the model and the first model are not trained by a same MTLF, the first message further includes another interoperability indicator.

For example, if the first AnLF may further provide, for the service consumer network element via a second model, the service corresponding to the analytics identifier, and the second model is trained by a second MTLF, the first message includes a second interoperability indicator. The second interoperability indicator is an interoperability indicator of the analytics identifier of the second MTLF, or an interoperability indicator of the second MTLF.

Step 808: The service consumer network element determines that the target AnLF needs to be selected.

Step 809: The service consumer network element sends an NF discovery message 2 to an NRF. Step 808 corresponds to step 600.

The NF discovery message 2 includes the first interoperability indicator, or the first interoperability indicator and the analytics identifier.

The NF discovery message 2 is used to discover an AnLF, or is used to discover an NWDAF including an AnLF.

It may be understood that if the first message may further include another interoperability indicator, the NF discovery message 2 further includes the another interoperability indicator.

For example, the first message further includes the second interoperability indicator. Therefore, the NF discovery message 2 further includes the second interoperability indicator.

Step 810: The NRF determines one or more third AnLFs based on the NF discovery message 2. Step 810 corresponds to step 610.

For details, refer to step 709. Details are not described herein.

Step 811: The NRF sends an NF discovery response message 2 to the service consumer network element. Step 811 corresponds to step 620.

For example, the NF discovery response message 2 includes information about the one or more third AnLFs.

Step 812: The service consumer network element sends a second analytics subscription message to the target AnLF. The second analytics subscription message includes the analytics identifier.

For example, the service consumer network element determines the target AnLF based on the received NF discovery response message 2, and sends the second analytics subscription message to the target AnLF.

In an example, when the NF discovery response message 2 includes information about one third AnLF, the service consumer network element sends the second analytics subscription message to the third AnLF, where the third AnLF is the target AnLF.

In another example, when the NF discovery response message 2 includes information about a plurality of third AnLFs, the service consumer network element sends the second analytics subscription message to the target AnLF, where the target AnLF is one of the plurality of third AnLFs. A specific manner in which the service consumer network element determines the target AnLF from the plurality of third AnLFs is not limited in this application.

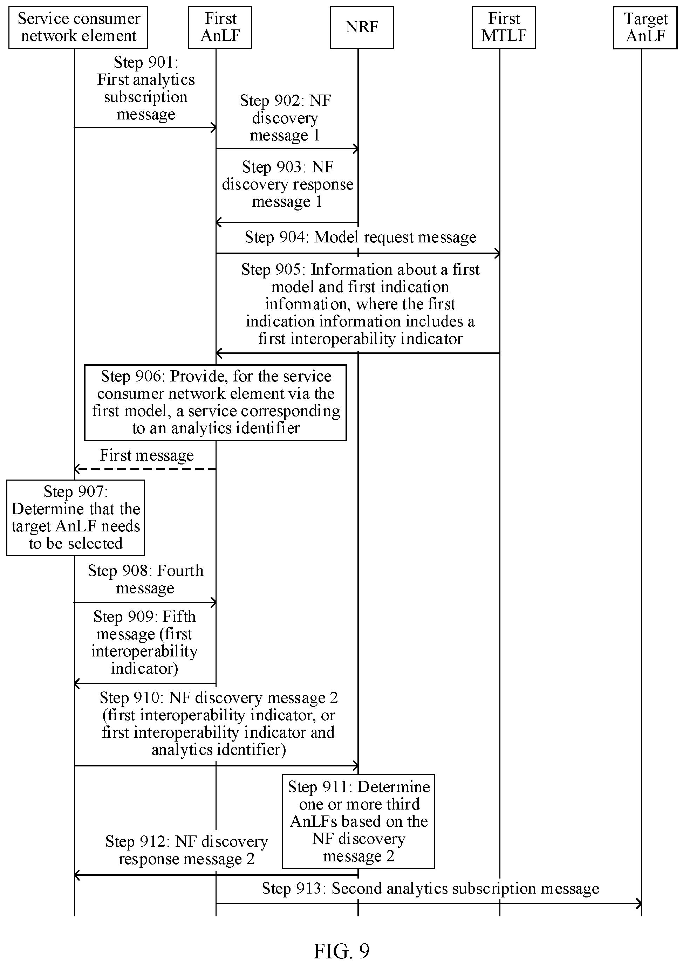

As shown in FIG. 9, if the first network element is a service consumer network element, a process in which the service consumer network element determines a target AnLF is specifically as follows.

For step 901 to step 906, refer to step 701 to step 706. Details are not described herein again.

Step 907: The service consumer network element determines that the target AnLF needs to be selected.

Step 908: The service consumer network element sends a fourth message to a first AnLF. The fourth message is used to request to provide, for the service consumer network element, an interoperability indicator of a model with a service corresponding to an analytics identifier. The fourth message may also be referred to as an AnLF transfer request message.

Step 909: The first AnLF sends a fifth message to the service consumer network element. The fifth message includes a first interoperability indicator. The fourth message may also be referred to as an AnLF transfer response message.

It may be understood that, if the first AnLF provides, for the service consumer network element via a first model, the service corresponding to the analytics identifier, the fifth message includes the first interoperability indicator. If the first AnLF further provides, for the service consumer network element via another model, the service corresponding to the analytics identifier, and the model and the first model are not trained by a same MTLF, the fifth message may further include another interoperability indicator.

For example, the fifth message further includes a second interoperability indicator. The second interoperability indicator is an interoperability indicator of the analytics identifier of the second MTLF, or an interoperability indicator of the second MTLF.

Step 910: The service consumer network element sends an NF discovery message 2 to an NRF. Step 910 corresponds to step 600.

The NF discovery message 2 includes the first interoperability indicator, or the first interoperability indicator and the analytics identifier.

The NF discovery message 2 is used to discover an AnLF, or is used to discover an NWDAF including an AnLF.

It may be understood that if the fifth message may further include the second interoperability indicator, the NF discovery message 2 further includes the second interoperability indicator.

For step 911 to step 913, refer to step 810 to step 812. Details are not described herein again.

According to the method in FIG. 8 or FIG. 9, when the service consumer network element determines the target AnLF, the NRF may determine one or more third AnLFs for the service consumer network element based on the first interoperability indicator or the first interoperability indicator and the analytics identifier, and the service consumer network element determines the target AnLF from the one or more third AnLFs, so that after a second analytics subscription message is sent to the target AnLF, the target AnLF can better provide the service for the service consumer network element. This can ensure continuity of the service.

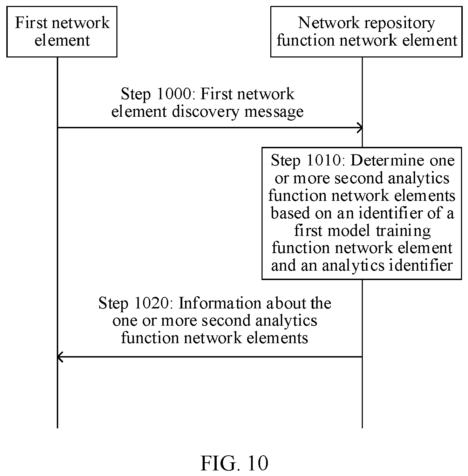

This application further provides a communication method. As shown in FIG. 10, the method includes the following steps.

Step 1000: A first network element sends a first network element discovery message to a network repository function network element. Correspondingly, the network repository function network element receives the first network element discovery message from the first network element.

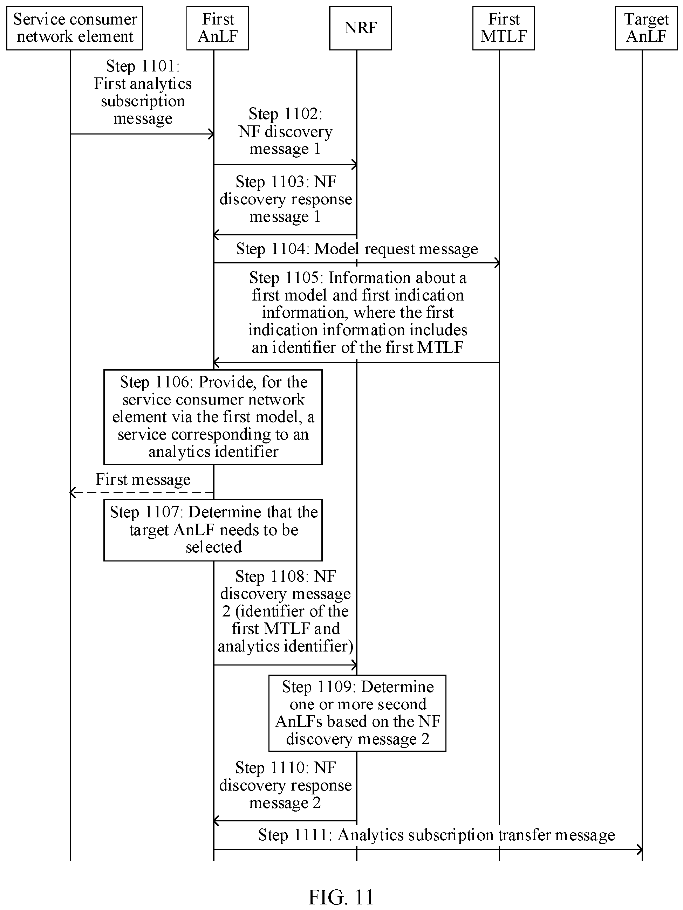

The first network element discovery message is used to discover an analytics function network element, and the first network element discovery message includes an identifier of a first model training function network element and an analytics identifier. For how the first network element learns of an identifier of a first vendor and the analytics identifier, refer to the following related steps shown in FIG. 11.

Step 1010: The network repository function network element determines a second analytics function network elements based on the identifier of the first model training function network element and the analytics identifier, where an identifier of a vendor of the second analytics function network element is an identifier in a vendor identifier list included in a first interoperability indicator. The first interoperability indicator is an interoperability indicator corresponding to the analytics identifier of the first model training function network element, or an interoperability indicator of the first model training function network element.

For example, the network repository function network element may determine, based on the identifier of the first model training function network element, information about the first model training function network element, for example, an NF profile of the first model training function network element, and further determine the first interoperability indicator from the information about the first model training function network element based on the analytics identifier. The first interoperability indicator includes a vendor identifier list. Then, the network repository function network element determines one or more second analytics function network elements based on the vendor identifier list included in the first interoperability indicator. An identifier of a vendor of the second analytics function network element belongs to the vendor identifier list included in the first interoperability indicator.

Step 1020: The network repository function network element sends information about the one or more second analytics function network elements to the first network element. Correspondingly, the first network element receives the information about the one or more second analytics function network elements from the network repository function network element.

According to the foregoing method, the first network element includes the identifier of the first model training function network element and the analytics identifier in the first network element discovery message, so that the network repository function network element may determine a candidate analytics function network element (namely, the one or more second analytics function network elements) based on the first network element discovery message, and sends information about the candidate analytics function network element to the first network element. The first network element determines a target analytics function network element based on the information about the candidate analytics function network element. The target analytics function network element can better provide services for a service consumer network element, so that continuity of the service can be ensured.

For example, the first network element may be a first analytics function network element (or referred to as a source analytics function network element) or a service consumer network element. The following provides descriptions with reference to the embodiment shown in FIG. 11. The following uses an example in which the analytics function network element is an AnLF, the model training function network element is an MTLF, and the network repository function network element is an NRF for description.

As shown in FIG. 11, if the first network element is a first AnLF, a process in which the first AnLF determines a target AnLF is specifically as follows.

For step 1101 to step 1104, refer to step 301 to step 304.

Step 1105: The first MTLF sends information about a first model and first indication information to the first AnLF.

For example, the first MTLF sends a model provision notify message to the first AnLF, where the model provision notify message includes the information about the first model and the first indication information. The first model is used to provide a service corresponding to an analytics identifier, and the first indication information includes information about an MTLF that provides the information about the first model. If the first model is trained by the first MTLF, the first indication information includes an identifier of the first MTLF. If the first model is trained by a second MTLF, the first indication information includes an identifier of the second MTLF. The following merely uses an example in which the first indication information includes the identifier of the first MTLF for description.

It may be understood that the first MTLF sends information about at least one model to the first AnLF. The at least one model may include a model trained by the first MTLF, or may include a model trained by another MTLF. There may be one or more models trained by the first MTLF, and there may also be one or more models trained by the another MTLF.

In an example, the first MTLF sends information about a second model and second indication information to the first AnLF, where the second model is used to provide the service corresponding to the analytics identifier, and the second indication information includes an identifier of an MTLF that provides the information about the second model. If the second model is trained by a second MTLF, the second indication information includes an identifier of the second MTLF.

Example 1: The first MTLF sends, to the first AnLF, an identifier of a model 1 and indication information 1, an identifier of a model 2 and indication information 2, an identifier of a model 3 and indication information 3, where the indication information 1, the indication information 2, and the indication information 3 each include an identifier of an MTLF 1. That is, the MTLF 1 trains the model 1, the model 2, and the model 3.

Example 2: The first MTLF sends, to the first AnLF, an identifier of a model 1 and indication information 1, an identifier of a model 2 and indication information 2, an identifier of a model 3 and indication information 3, where the indication information 1 and the indication information 2 each include an identifier of an MTLF 1, and the indication information 3 includes an identifier of an MTLF 2. That is, the MTLF 1 trains the model 1 and the model 2, and the MTLF 2 trains the model 3.

In still another example, the first model is a model jointly trained by a plurality of MTLFs, and the first indication information includes at least one identifier in a list of identifiers of MTLFs jointly training the model.

For example, the first indication information includes the list of the identifiers of the MTLFs jointly training the model, or some identifiers of the MTLFs in the list of the identifiers of the MTLFs.

Step 1106: The first AnLF provides, for the service consumer network element via the first model, the service corresponding to the analytics identifier.

For example, the first AnLF obtains the first model based on the information about the first model, and provides, for the service consumer network element via the first model, the service corresponding to the analytics identifier.

It may be understood that, if obtaining information about a plurality of models, the first AnLF may select at least one model from the plurality of models based on the information about the plurality of models, to provide, for the service consumer network element, the service corresponding to the analytics identifier. A specific manner of selecting the model by the first AnLF is not limited in this application.

In addition, the first AnLF may further send a first message to the service consumer network element, where the first message may be an analytics subscription response and/or an analytics subscription notification.

Step 1107: The first AnLF determines that the target AnLF needs to be selected.

Step 1108: The first AnLF sends an NF discovery message 2 to the NRF. Step 1108 corresponds to step 1000.

The NF discovery message 2 includes the identifier of the first MTLF and the analytics identifier. The NF discovery message 2 is used to discover an AnLF, or is used to discover an NWDAF including an AnLF.

It may be understood that, if the first AnLF provides, for the service consumer network element via the first model, the service corresponding to the analytics identifier, the NF discovery message 2 includes the identifier of the MTLF training the first model. If the first AnLF further provides, for the service consumer network element via another model, the service corresponding to the analytics identifier, and the model and the first model are not trained by a same MTLF, the NF discovery message 2 further includes an identifier of the another MTLF for training.

For example, if the first AnLF further provides, for the service consumer network element via the second model, the service corresponding to the analytics identifier, and the second model and the first model are not trained by a same MTLF, the NF discovery message 2 includes the identifier of the MTLF that trains the second model.

Step 1109: The NRF determines one or more second AnLFs based on the NF discovery message 2. Step 1109 corresponds to step 1010.

For example, the NRF may determine the one or more second AnLFs based on the NF discovery message 2. An identifier of a vendor of the second AnLF belongs to a vendor identifier list included in a first interoperability indicator. The first interoperability indicator is an interoperability indicator corresponding to the analytics identifier of the first MTLF, or an interoperability indicator of the first MTLF.

In addition, if the NF discovery message 2 further includes an identifier of another MTLF, for example, the identifier of the second MTLF, the identifier of the vendor of the second AnLF belongs to a vendor identifier list included in a second interoperability indicator. The second interoperability indicator is an interoperability indicator corresponding to the analytics identifier of the second MTLF, or an interoperability indicator of the second MTLF. That is, the identifier of the vendor of the second AnLF belongs to an intersection set of the vendor identifier list included in the first interoperability indicator and the vendor identifier list included in the second interoperability indicator.

In other words, if the NF discovery request message 2 includes identifiers of x MTLFs, the NRF determines that the identifier of the vendor of the AnLF belongs to an intersection set of vendor identifier lists respectively included in the x interoperability indicators, where x is a positive integer. The x interoperability indicators are in one-to-one correspondence with the x MTLFs.

Step 1110: The NRF sends an NF discovery response message 2 to the first AnLF. Step 1110 corresponds to step 1020.

For example, the NF discovery response message 2 includes information about the one or more second AnLFs.

Step 1111: The first AnLF sends an analytics subscription transfer message to the target AnLF. The analytics subscription transfer message includes the analytics identifier.

For example, the first AnLF determines the target AnLF based on the received NF discovery response message 2, and sends the analytics subscription transfer message to the target AnLF. Step 1111 is described only by using an example in which the target AnLF is the second AnLF.

In an example, when the NF discovery response message 2 includes information about one second AnLF, the first AnLF sends the analytics subscription transfer message to the second AnLF, where the second AnLF is the target AnLF.

In another example, when the NF discovery response message 2 includes information about a plurality of second AnLFs, the first AnLF sends the analytics subscription transfer message to the target AnLF, where the target AnLF is one of the plurality of second AnLFs. A specific manner in which the first AnLF determines the target AnLF from the plurality of second AnLFs is not limited in this application.

According to the method shown in FIG. 11, the first AnLF provides the service for the service consumer network element via the first model trained by the first MTLF. When the first AnLF determines the target AnLF, the first AnLF may determine, via the NRF, the target AnLF that can use the model trained by the first MTLF, so that after analytics subscription is transferred, the target AnLF may use the model trained by the first MTLF.

In addition, similar to determining the target AnLF by the first AnLF, when the service consumer network element determines the target AnLF, the service consumer network element may determine, via the NRF, the target AnLF that can use the model trained by the first MTLF, so that after the service consumer network element sends the second analytics subscription message to the target AnLF, the target AnLF may use the model trained by the first MTLF.

It should be noted that in embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

It may be understood that, to implement functions in the foregoing embodiments, the first network element, the first model training function network element, and the network repository function network element include corresponding hardware structures and/or software modules for performing the functions. A person skilled in the art should be easily aware that, in combination with units and method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

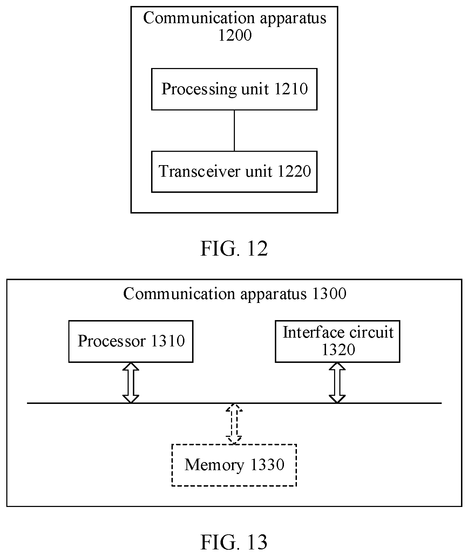

FIG. 12 and FIG. 13 each are a diagram of a structure of a possible communication apparatus according to an embodiment of this application. These communication apparatuses may be configured to implement functions of the first network element, the first model training function network element, and the network repository function network element in the foregoing method embodiments, and therefore can also achieve beneficial effects of the foregoing method embodiments.

As shown in FIG. 12, the communication apparatus 1200 includes a processing unit 1210 and a transceiver unit 1220. The communication apparatus 1200 is configured to implement functions of the first network element, the first model training function network element, and the network repository function network element in the foregoing method embodiments.

When the communication apparatus 1200 is configured to implement the function of the first model training function network element in the foregoing method embodiments:
the processing unit 1210 invokes the transceiver unit 1220 to perform the following operations: receiving a model request message from a first analytics function network element, where the model request message includes an analytics identifier, and the model request message is used to request a model that provides a service corresponding to the analytics identifier; sending information about a first model and first indication information to the first analytics function network element, where the first indication information includes at least one of the following: an identifier of a model training function network element that provides the information about the first model, an identifier of a first vendor, or a first interoperability indicator, the identifier of the first vendor indicates a vendor of a network element that provides the first model, and the first interoperability indicator corresponds to the analytics identifier.

In a possible design, the first model is trained by the first model training function network element; the identifier of the model training function network element that provides the information about the first model is an identifier of the first model training function network element; the identifier of the first vendor is an identifier of a vendor of the first model training function network element; and the first interoperability indicator is an interoperability indicator corresponding to the analytics identifier of the first model training function network element.

In a possible design, the first model is trained by a second model training function network element; the identifier of the network element that provides the information about the first model is an identifier of the second model training function network element; the identifier of the first vendor is an identifier of a vendor of the second model training function network element; and the first interoperability indicator is an interoperability indicator corresponding to the analytics identifier of the second model training function network element.

In a possible design, the transceiver unit 1220 is configured to send information about a second model and second indication information to the first analytics function network element, where the second model is used to provide the service corresponding to the analytics identifier, the second indication information includes at least one of the following: an identifier of a model training function network element that provides the information about the second model, an identifier of a second vendor, or a second interoperability indicator, the identifier of the second vendor indicates a vendor of a network element that provides the second model, and the second interoperability indicator corresponds to the analytics identifier.

In a possible design, the model training function network element that provides the information about the second model is different from the model training function network element that provides the information about the first model; the identifier of the first vendor is different from the identifier of the second vendor; and the second interoperability indicator is an interoperability indicator corresponding to the analytics identifier of the model training function network element that provides the information about the second model.

When the communication apparatus 1200 is configured to implement the function of the first network element in the foregoing method embodiments:
the processing unit 1210 invokes the transceiver unit 1220 to perform the following operations: sending a network element discovery message to a network repository function network element, where the network element discovery message is used to discover an analytics function network element, the network element discovery message includes a first interoperability indicator, and the first interoperability indicator includes a first vendor identifier list; and receiving information about one or more analytics function network elements from the network repository function network element, where an identifier of a vendor of the analytics function network element is an identifier in the first vendor identifier list.

In a possible design, a vendor in the first vendor identifier list is allowed to obtain a model from a model training function network element, or a vendor in the first vendor identifier list is allowed to retrieve or use a model provided by a model training function network element.

In a possible design, the network element discovery message further includes an analytics identifier, and the analytics function network element supports provision of a service corresponding to the analytics identifier.

In a possible design, after receiving the information about the one or more analytics function network elements from the network repository function network element, the processing unit 1210 is configured to select a target function network element, where an identifier of a vendor of the target function network element is an identifier in the first vendor identifier list, and the target analytics function network element is one of the one or more analytics function network elements.

In a possible design, the first network element is a first analytics function network element; and the transceiver unit 1220 is configured to send an analytics subscription transfer message to the target analytics function network element, where the analytics subscription transfer message includes the analytics identifier.

In a possible design, the first network element is the first analytics function network element; and before sending the network element discovery message to the network repository function network element, the transceiver unit 1220 is configured to: send a fourth network element discovery message to the network repository function network element, where the fourth network element discovery message is used to discover a model training function network element, and the fourth network element discovery message includes the analytics identifier; and receive information about a first model training function network element from the network repository function network element, where the information about the first model training function network element includes the first interoperability indicator, and the first interoperability indicator corresponds to the analytics identifier.

In a possible design, the first network element is the first analytics function network element; and before sending the network element discovery message to the network repository function network element, the transceiver unit 1220 is configured to: send a model request message to the first model training function network element, where the model request message includes the analytics identifier; and receive information about a first model and first indication information from the first model training function network element, where the first model is used to provide the service corresponding to the analytics identifier, the first indication information includes the first interoperability indicator, and the first interoperability indicator corresponds to the analytics identifier.

In a possible design, before sending the model request message to the first model training function network element, the transceiver unit 1220 is configured to receive a first analytics subscription message from a service consumer network element, where the first analytics subscription message includes the analytics identifier; and after receiving the information about the first model and the first indication information from the first model training function network element, the processing unit 1210 is configured to provide, for the service consumer network element via the first model, the service corresponding to the analytics identifier.

In a possible design, before sending the network element discovery message to the network repository function network element, the transceiver unit 1220 is configured to receive information about a second model and second indication information, where the second model is used to provide the service corresponding to the analytics identifier, the second indication information includes a second interoperability indicator, the second interoperability indicator corresponds to the analytics identifier, and the second interoperability indicator includes a second vendor identifier list.

In a possible design, the first network element is a service consumer network element; and the transceiver unit 1220 is configured to send a second analytics subscription message to the target analytics function network element, where the second analytics subscription message includes the analytics identifier.

In a possible design, the first network element is the service consumer network element.

Before sending the network element discovery message to the network repository function network element, the transceiver unit 1220 is configured to: send a first analytics subscription message to a first analytics function network element, where the first analytics subscription message includes the analytics identifier; and receive a first message from the first analytics function network element, where the first message is an analytics subscription response or an analytics subscription notification, the first message includes the first interoperability indicator, and the first interoperability indicator corresponds to the analytics identifier.

In a possible design, the first message further includes a second interoperability indicator, the second interoperability indicator corresponds to the analytics identifier, and the second interoperability indicator includes a second vendor identifier list.

In a possible design, the network element discovery message further includes the second interoperability indicator; and the identifier of the vendor of the analytics function network element is an identifier in the second vendor identifier list.

When the communication apparatus 1200 is configured to implement the function of the network repository function network element in the foregoing method embodiments:
the transceiver unit 1220 is configured to receive a network element discovery message from a first network element, where the network element discovery message includes a first interoperability indicator; and the first interoperability indicator includes a first vendor identifier list;
the processing unit 1210 is configured to determine one or more analytics function network elements based on the first interoperability indicator, where an identifier of a vendor of the analytics function network element is an identifier in the first vendor identifier list; and
the transceiver unit 1220 is configured to send information about the one or more analytics function network elements to the first network element.

In a possible design, a vendor in the first vendor identifier list is allowed to obtain a model from a model training function network element, or a vendor in the first vendor identifier list is allowed to retrieve or use a model provided by a model training function network element.

In a possible design, the network element discovery message further includes an analytics identifier, and the analytics function network element supports provision of a service corresponding to the analytics identifier.

In a possible design, the first network element is a service consumer network element or a first analytics function network element.

In a possible design, the network element discovery message further includes a second interoperability indicator, and the second interoperability indicator includes a second vendor identifier list; and the identifier of the vendor of the analytics function network element is an identifier in the second vendor identifier list.

For more detailed descriptions of the processing unit 1210 and the transceiver unit 1220, directly refer to the related descriptions in the foregoing method embodiments. Details are not described herein again.

As shown in FIG. 13, the communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions to be executed by the processor 1310, store input data required for running instructions by the processor 1310, or store data generated after the processor 1310 runs instructions.

When the communication apparatus 1300 is configured to implement the method shown in FIG. 5, the processor 1310 is configured to implement a function of the processing unit 1210, and the interface circuit 1320 is configured to implement a function of the transceiver unit 1220.

It should be noted that the processor in this embodiment of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes a processor and a memory. As shown in FIG. 13, the communication apparatus 1300 includes a processor 1310 and a memory 1330. The processor 1310 is coupled to the memory 1330. The memory 1330 stores instructions. When the instructions stored in the memory 1330 are executed by the processor 1310, the communication apparatus 1300 performs the method performed by each network element in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. The storage medium may alternatively be a component of the processor. The processor and the storage medium may be disposed in the ASIC. In addition, the ASIC may be located in the foregoing network element. The processor and the storage medium may alternatively exist in the foregoing network element as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, "at least one" refers to one or more, and "a plurality of" refers to two or more. "And/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving, by a first model training function network element, a model request message from a first analytics function network element, wherein the model request message comprises an analytics identifier, and the model request message is used to request a model that provides a service corresponding to the analytics identifier; and
sending, by the first model training function network element, information about a first model and first indication information to the first analytics function network element, wherein the first indication information comprises at least one of the following: an identifier of a model training function network element that provides the information about the first model, an identifier of a first vendor, or a first interoperability indicator, the identifier of the first vendor indicates a vendor of a network element that provides the first model, and the first interoperability indicator corresponds to the analytics identifier.

2. The method according to claim 1, wherein the first model is trained by the first model training function network element;
the identifier of the model training function network element that provides the information about the first model is an identifier of the first model training function network element;
the identifier of the first vendor is an identifier of a vendor of the first model training function network element; and
the first interoperability indicator is an interoperability indicator corresponding to the analytics identifier of the first model training function network element.

3. The method according to claim 1, wherein the first model is trained by a second model training function network element;
the identifier of the network element that provides the information about the first model is an identifier of the second model training function network element;
the identifier of the first vendor is an identifier of a vendor of the second model training function network element; and
the first interoperability indicator is an interoperability indicator corresponding to the analytics identifier of the second model training function network element.

4. The method according to claim 1, further comprising:
sending, by the first model training function network element, information about a second model and second indication information to the first analytics function network element, wherein the second model is used to provide the service corresponding to the analytics identifier, the second indication information comprises at least one of the following: an identifier of a model training function network element that provides the information about the second model, an identifier of a second vendor, or a second interoperability indicator, the identifier of the second vendor indicates a vendor of a network element that provides the second model, and the second interoperability indicator corresponds to the analytics identifier.

5. The method according to claim 4, wherein the model training function network element that provides the information about the second model is different from the model training function network element that provides the information about the first model;
the identifier of the first vendor is different from the identifier of the second vendor; and
the second interoperability indicator is an interoperability indicator corresponding to the analytics identifier of the model training function network element that provides the information about the second model.

6. A communication method, wherein the method comprises:
sending, by a first network element, a network element discovery message to a network repository function network element, wherein the network element discovery message is used to discover an analytics function network element, and the network element discovery message comprises a first vendor identifier list; and
receiving, by the first network element, information about one or more analytics function network elements from the network repository function network element, wherein an identifier of a vendor of the analytics function network element is an identifier in the first vendor identifier list.

7. The method according to claim 6, wherein a vendor in the first vendor identifier list is allowed to obtain a model from a model training function network element, or a vendor in the first vendor identifier list is allowed to retrieve or use a model provided by a model training function network element.

8. The method according to claim 6 or 7, wherein the network element discovery message further comprises an analytics identifier, and the analytics function network element supports provision of a service corresponding to the analytics identifier.

9. The method according to any one of claims 6 to 8, wherein after receiving, by the first network element, the information about the one or more analytics function network elements from the network repository function network element, the method further comprises:
selecting, by the first network element, a target function network element, wherein the target analytics function network element is one of the one or more analytics function network elements.

10. The method according to claim 9, wherein the first network element is a first analytics function network element, and the method further comprises:
sending an analytics subscription transfer message to the target analytics function network element, wherein the analytics subscription transfer message comprises the analytics identifier.

11. The method according to any one of claims 6 to 10, wherein the network element discovery message comprises a first interoperability indicator, and the first interoperability indicator comprises the first vendor identifier list.

12. The method according to any one of claims 6 to 11, wherein the first network element is the first analytics function network element; and
before the sending the network element discovery message to the network repository function network element, the method further comprises:
sending, to the network repository function network element, a network element discovery message used to discover a model training function network element, wherein the network element discovery message used to discover the model training function network element comprises the analytics identifier; and
receiving information about a first model training function network element from the network repository function network element, wherein the information about the first model training function network element comprises the first interoperability indicator, the first interoperability indicator corresponds to the analytics identifier, and the first interoperability indicator comprises the first vendor identifier list.

13. The method according to any one of claims 6 to 12, wherein the first network element is the first analytics function network element; and
before the sending the network element discovery message to the network repository function network element, the method further comprises:
sending a model request message to the first model training function network element, wherein the model request message comprises the analytics identifier; and
receiving information about a first model and first indication information from the first model training function network element, wherein the first model is used to provide the service corresponding to the analytics identifier, the first indication information comprises the first interoperability indicator, the first interoperability indicator corresponds to the analytics identifier, and the first interoperability indicator comprises the first vendor identifier list.

14. The method according to claim 13, wherein before the sending the model request message to the first model training function network element, the method further comprises:
receiving a first analytics subscription message from a service consumer network element, wherein the first analytics subscription message comprises the analytics identifier; and
after receiving the information about the first model and the first indication information from the first model training function network element, the method further comprises:
providing, for the service consumer network element via the first model, the service corresponding to the analytics identifier.

15. The method according to claim 13 or 14, wherein before the sending the network element discovery message to the network repository function network element, the method further comprises:
receiving information about a second model and second indication information, wherein the second model is used to provide the service corresponding to the analytics identifier, the second indication information comprises a second interoperability indicator, the second interoperability indicator corresponds to the analytics identifier, and the second interoperability indicator comprises a second vendor identifier list.

16. The method according to claim 9, wherein the first network element is a service consumer network element, and the method further comprises:
sending a second analytics subscription message to the target analytics function network element, wherein the second analytics subscription message comprises the analytics identifier.

17. The method according to any one of claims 6 to 9 or 16, wherein the first network element is the service consumer network element; and
before the sending the network element discovery message to the network repository function network element, the method further comprises:
sending a first analytics subscription message to a first analytics function network element, wherein the first analytics subscription message comprises the analytics identifier; and
receiving a first message from the first analytics function network element, wherein the first message is an analytics subscription response or an analytics subscription notification, the first message comprises a first interoperability indicator, the first interoperability indicator corresponds to the analytics identifier, and the first interoperability indicator comprises the first vendor identifier list.

18. The method according to claim 17, wherein the first message further comprises a second interoperability indicator, the second interoperability indicator corresponds to the analytics identifier, and the second interoperability indicator comprises a second vendor identifier list.

19. The method according to claim 15 or 18, wherein the network element discovery message further comprises the second interoperability indicator; and
the identifier of the vendor of the analytics function network element is an identifier in the second vendor identifier list.

20. A communication method, wherein the method comprises:
receiving, by a network repository function network element, a network element discovery message from a first network element, wherein the network element discovery message comprises a first vendor identifier list;
determining, by the network repository function network element, one or more analytics function network elements based on the first vendor identifier list, wherein an identifier of a vendor of the analytics function network element is an identifier in the first vendor identifier list; and
sending, by the network repository function network element, information about the one or more analytics function network elements to the first network element.

21. The method according to claim 20, wherein the network element discovery message comprises a first interoperability indicator, and the first interoperability indicator comprises the first vendor identifier list.

22. The method according to claim 20 or 21, wherein a vendor in the first vendor identifier list is allowed to obtain a model from a model training function network element, or a vendor in the first vendor identifier list is allowed to retrieve or use a model provided by a model training function network element.

23. The method according to any one of claims 20 to 22, wherein the network element discovery message further comprises an analytics identifier, and the analytics function network element supports provision of a service corresponding to the analytics identifier.

24. The method according to any one of claims 20 to 23, wherein the first network element is a service consumer network element or a first analytics function network element.

25. The method according to any one of claims 20 to 24, wherein the network element discovery message further comprises the second interoperability indicator, and the second interoperability indicator comprises a second vendor identifier list; and
the identifier of the vendor of the analytics function network element is an identifier in the second vendor identifier list.

26. A communication method, wherein the method comprises:
sending, by a first network element, a first network element discovery message to a network repository function network element, wherein the first network element discovery message is used to discover an analytics function network element, and the first network element discovery message comprises an identifier of a first model training function network element and an analytics identifier; and
receiving, by the first network element, information about one or more second analytics function network elements from the network repository function network element, wherein an identifier of a vendor of the second analytics function network element is an identifier in a vendor identifier list comprised in a first interoperability indicator, wherein the first interoperability indicator is an interoperability indicator corresponding to the analytics identifier of the first model training function network element.

27. The method according to claim 26, wherein after receiving, by the first network element, the information about the one or more second analytics function network elements from the network repository function network element, the method further comprises:
selecting, by the first network element, a target function network element, wherein the target analytics function network element is one of the one or more second analytics function network elements.

28. The method according to claim 27, wherein the first network element is a first analytics function network element; and the method further comprises:
sending, by the first analytics function network element, an analytics subscription transfer message to the target analytics function network element, wherein the analytics subscription transfer message comprises the analytics identifier.

29. The method according to any one of claims 26 to 28, wherein the first network element is the first analytics function network element; and the method further comprises:
before sending the first network element discovery message to the network repository function network element, sending, by the first analytics function network element, a model request message to the first model training function network element, wherein the model request message comprises the analytics identifier; and
receiving information about a first model and first indication information from the first model training function network element, wherein the first model is used to provide a service corresponding to the analytics identifier, the first model is trained by the first model training function network element, and the first indication information comprises the identifier of the first model training function network element.

30. The method according to claim 29, wherein before sending the model request message to the first model training function network element, the method further comprises:
receiving, by the first analytics function network element, a first analytics subscription message from a service consumer network element, wherein the first analytics subscription message comprises the analytics identifier; and
after receiving the information about the first model and the first indication information from the first model training function network element, providing, for the service consumer network element via the first model, the service corresponding to the analytics identifier.

31. The method according to any one of claims 26 to 30, wherein before sending the first network element discovery message to the network repository function network element, the method further comprises:
receiving information about a second model and second indication information, wherein the second model is used to provide the service corresponding to the analytics identifier, the second model is trained by the second model training function network element, and the second indication information comprises an identifier of the second model training function network element.

32. The method according to claim 26 or 27, wherein the first network element is a service consumer network element; and the method further comprises:
sending, by the service consumer network element, a second analytics subscription message to the target analytics function network element, wherein the second analytics subscription message comprises the analytics identifier.

33. The method according to claim 26, 27 or 32, wherein the first network element is the service consumer network element; and the method further comprises:
before sending the first network element discovery message to the network repository function network element, sending, by the service consumer network element, a first analytics subscription message to a first analytics function network element, wherein the first analytics subscription message comprises the analytics identifier; and
receiving a first message from the first analytics function network element, wherein the first message is an analytics subscription response or an analytics subscription notification, and the first message comprises the identifier of the first model training function network element.

34. The method according to claim 33, wherein the first message further comprises an identifier of a second model training function network element.

35. The method according to claim 31 or 34, wherein the first network element discovery message further comprises the identifier of the second model training function network element; the identifier of the vendor of the second analytics function network element is also an identifier in a vendor identifier list comprised in a second interoperability indicator; and the second interoperability indicator is an interoperability indicator corresponding to the analytics identifier of the second model training function network element.

36. A communication method, wherein the method comprises:
receiving, by a network repository function network element, a first network element discovery message from a first network element, wherein the first network element discovery message is used to discover an analytics function network element, and the first network element discovery message comprises an identifier of a first model training function network element and an analytics identifier;
determining, by the network repository function network element, one or more second analytics function network elements based on the identifier of the first model training function network element and the analytics identifier, wherein an identifier of a vendor of the second analytics function network element is an identifier in a vendor identifier list comprised in a first interoperability indicator; and the first interoperability indicator is an interoperability indicator corresponding to the analytics identifier of the first model training function network element; and
sending, by the network repository function network element, information about the one or more second analytics function network elements to the first network element.

37. The method according to claim 36, wherein the first network element is a service consumer network element or a first analytics function network element.

38. The method according to claim 36 or 37, wherein the first network element discovery message further comprises an identifier of a second model training function network element; the identifier of the vendor of the second analytics function network element is also an identifier in a vendor identifier list comprised in a second interoperability indicator; and the second interoperability indicator is an interoperability indicator corresponding to the analytics identifier of the second model training function network element.

39. A communication method, wherein the method comprises:
sending, by a first network element, a third network element discovery message to a network repository function network element, wherein the third network element discovery message is used to discover an analytics function network element, and the third network element discovery message comprises an identifier of a first vendor; and
receiving, by the first network element, information about one or more fourth analytics function network elements from the network repository function network element, wherein the fourth analytics function network element supports use of a model of a vendor in a vendor identifier list comprised in a first operation identifier, and the identifier of the first vendor is an identifier in the vendor identifier list.

40. The method according to claim 39, wherein the third network element discovery message further comprises an analytics identifier, the fourth analytics function network element supports provision of a service corresponding to the analytics identifier, and the first operation identifier corresponds to the analytics identifier.

41. The method according to claim 39 or 40, wherein the first network element is a first analytics function network element; and the method further comprises:
after receiving the information about the one or more fourth analytics function network elements from the network repository function network element, selecting, by the first analytics function network element, a target analytics function network element, wherein the target analytics function network element is one of the one or more fourth analytics function network elements; and
sending an analytics subscription transfer message to the target analytics function network element, wherein the analytics subscription transfer message comprises the analytics identifier.

42. The method according to any one of claims 39 to 41, wherein the first network element is the first analytics function network element; and the method further comprises:
before sending the third network element discovery message to the network repository function network element, sending, by the first analytics function network element, a model request message to a first model training function network element, wherein the model request message comprises the analytics identifier; and
receiving information about a first model and first indication information from the first model training function network element, wherein the first model is used to provide the service corresponding to the analytics identifier, the first indication information comprises the identifier of the first vendor, and the identifier of the first vendor indicates a vendor of a network element that provides the first model.

43. The method according to claim 42, wherein before sending the model request message to the first model training function network element, the method further comprises:
receiving, by the first analytics function network element, a first analytics subscription message from a service consumer network element, wherein the first analytics subscription message comprises the analytics identifier; and
after receiving the information about the first model and the first indication information from the first model training function network element, providing, for the service consumer network element via the first model, the service corresponding to the analytics identifier.

44. The method according to any one of claims 39 to 43, wherein the method further comprises:
before sending the third network element discovery message to the network repository function network element, receiving, by the first analytics function network element, information about a second model and second indication information, wherein the second model is used to provide the service corresponding to the analytics identifier, the second indication information comprises an identifier of a second vendor, and the identifier of the second vendor indicates a vendor of a network element that provides the second model.

45. The method according to any one of claims 39 to 44, wherein the method further comprises:
sending a registration message to the network repository function network element, wherein the registration message comprises the first operation identifier of the first analytics function network element.

46. The method according to claim 39 or 40, wherein the first network element is a service consumer network element; and the method further comprises:
after receiving the information about the one or more fourth analytics function network elements from the network repository function network element, selecting, by the service consumer network element, a target analytics function network element, wherein the target analytics function network element is one of the one or more fourth analytics function network elements; and
sending a second analytics subscription message to the target analytics function network element, wherein the second analytics subscription message comprises the analytics identifier.

47. The method according to claim 39, 40 or 46, wherein the first network element is the service consumer network element; and the method further comprises:
before sending the third network element discovery message to the network repository function network element, sending, by the service consumer network element, a first analytics subscription message to a first analytics function network element, wherein the first analytics subscription message comprises the analytics identifier; and
receiving a first message from the first analytics function network element, wherein the first message is an analytics subscription response or an analytics subscription notification, and the first message comprises the identifier of the first vendor.

48. The method according to claim 47, wherein the first message further comprises an identifier of a second vendor.

49. The method according to claim 44 or 48, wherein the third network element discovery message further comprises the identifier of the second vendor; and the identifier of the second vendor is another identifier in the vendor identifier list.

50. A communication method, wherein the method comprises:
receiving, by a network repository function network element, a third network element discovery message from a first network element, wherein the third network element discovery message is used to discover an analytics function network element, and the third network element discovery message comprises an identifier of a first vendor; and
determining, by the network repository function network element, one or more fourth analytics function network elements based on the identifier of the first vendor, wherein the fourth analytics function network element supports use of a model of a vendor in a vendor identifier list comprised in a first operation identifier, and the identifier of the first vendor is an identifier in the vendor identifier list; and sending, by the network repository function network element, information about the one or more fourth analytics function network elements to the first network element.

51. The method according to claim 50, wherein the third network element discovery message further comprises an analytics identifier, and the first operation identifier corresponds to the analytics identifier.

52. The method according to claim 50 or 51, wherein the first network element is a service consumer network element or a first analytics function network element.

53. The method according to any one of claims 50 to 52, wherein the third network element discovery message further comprises an identifier of a second vendor; and the identifier of the second vendor is another identifier in the vendor identifier list.

54. The method according to any one of claims 50 to 53, wherein the method further comprises:
before receiving the third network element discovery message from the first network element, receiving, by the network repository function network element, a registration message from the fourth analytics function network element, wherein the registration message comprises the first operation identifier.

55. A communication method, wherein the method comprises:
sending, by a first network element, a second network element discovery message to a network repository function network element, wherein the second network element discovery message is used to discover an analytics function network element, the second network element discovery message comprises a first interoperability indicator, and the first interoperability indicator comprises a first vendor identifier list;
receiving, by the first network element, information about one or more third analytics function network elements from the network repository function network element, wherein the third analytics function network element supports use of a model of a vendor in a vendor identifier list comprised in a first operation identifier, wherein the vendor identifier list comprised in the first operation identifier comprises the first vendor identifier list.

56. The method according to claim 55, wherein the second network element discovery message further comprises an analytics identifier, the third analytics function network element supports provision of a service corresponding to the analytics identifier, and the first operation identifier corresponds to the analytics identifier.

57. The method according to claim 55 or 56, wherein the method further comprises:
selecting, by the first network element, a target function network element, wherein an identifier of a vendor of the target function network element is an identifier in the first vendor identifier list, and the target analytics function network element is one of the one or more third analytics function network elements.

58. The method according to claim 57, wherein the first network element is a first analytics function network element; and the method further comprises:
sending, by the first analytics function network element, an analytics subscription transfer message to the target analytics function network element, wherein the analytics subscription transfer message comprises the analytics identifier.

59. The method according to claim 58, wherein before sending the second network element discovery message to the network repository function network element, the method further comprises:
sending, by the first analytics function network element, a fourth network element discovery message to the network repository function network element, wherein the fourth network element discovery message is used to discover a model training function network element, and the fourth network element discovery message comprises the analytics identifier; and
receiving information about the first model training function network element from the network repository function network element, wherein the information about the first model training function network element comprises the first interoperability indicator, and the first interoperability indicator corresponds to the analytics identifier.

60. The method according to any one of claims 55 to 59, wherein the first network element is the first analytics function network element; and the method further comprises:
before sending the second network element discovery message to the network repository function network element, sending, by the first analytics function network element, a model request message to the first model training function network element, wherein the model request message comprises the analytics identifier; and
receiving information about a first model and first indication information from the first model training function network element, wherein the first model is used to provide the service corresponding to the analytics identifier, the first indication information comprises the first interoperability indicator, and the first interoperability indicator corresponds to the analytics identifier.

61. The method according to claim 60, wherein before sending the model request message to the first model training function network element, the method further comprises:
receiving, by the first analytics function network element, a first analytics subscription message from a service consumer network element, wherein the first analytics subscription message comprises the analytics identifier; and
after receiving the information about the first model and the first indication information from the first model training function network element, providing, for the service consumer network element via the first model, the service corresponding to the analytics identifier.

62. The method according to any one of claims 55 to 61, wherein the method further comprises:
before sending the second network element discovery message to the network repository function network element, receiving, by the first analytics function network element, information about a second model and second indication information, wherein the second model is used to provide the service corresponding to the analytics identifier, the second indication information comprises a second interoperability indicator, the second interoperability indicator corresponds to the analytics identifier, and the second interoperability indicator comprises a second vendor identifier list.

63. The method according to any one of claims 55 to 62, wherein the method further comprises:
sending, by the first analytics function network element, a registration message to the network repository function network element, wherein the registration message comprises the first operation identifier of the first analytics function network element.

64. The method according to claim 55 or 56, wherein the first network element is a service consumer network element; and the method further comprises:
sending, by the service consumer network element, a second analytics subscription message to the target analytics function network element, wherein the second analytics subscription message comprises the analytics identifier, and the information about the third analytics function network element comprises information about the target analytics function network element.

65. The method according to claim 54 or 56, wherein the first network element is a service consumer network element; and the method further comprises:
before sending the second network element discovery message to the network repository function network element, sending, by the service consumer network element, a first analytics subscription message to a first analytics function network element, wherein the first analytics subscription message comprises the analytics identifier; and
receiving a first message from the first analytics function network element, wherein the first message is an analytics subscription response or an analytics subscription notification, the first message comprises the first interoperability indicator, and the first interoperability indicator corresponds to the analytics identifier.

66. The method according to claim 65, wherein the first message further comprises a second interoperability indicator, the second interoperability indicator corresponds to the analytics identifier, and the second interoperability indicator comprises a second vendor identifier list.

67. The method according to claim 62 or 65, wherein the second network element discovery message further comprises the second interoperability indicator; and the vendor identifier list comprised in the first operation identifier further comprises the second vendor identifier list.

68. A communication method, wherein the method comprises:
receiving, by a network repository function network element, a second network element discovery message from a first network element, wherein the second network element discovery message comprises a first interoperability indicator; and the first interoperability indicator comprises a first vendor identifier list;
determining, by the network repository function network element, one or more third analytics function network elements based on the first interoperability indicator, wherein an identifier of a vendor of the third analytics function network element is an identifier in the first vendor identifier list; and
sending, by the network repository function network element, information about the one or more third analytics function network elements to the first network element.

69. The method according to claim 68, wherein the second network element discovery message further comprises an analytics identifier, the third analytics function network element supports provision of a service corresponding to the analytics identifier, and the first operation identifier corresponds to the analytics identifier.

70. The method according to claim 68 or 69, wherein the first network element is a service consumer network element or a first analytics function network element.

71. The method according to any one of claims 68 to 70, wherein before receiving, by the network repository function network element, the second network element discovery message from the first network element, the method further comprises:
receiving, by the network repository function network element, a registration message from the third analytics function network element, wherein the registration message comprises the first operation identifier of the third analytics function network element.

72. The method according to any one of claims 68 to 71, wherein the second network element discovery message further comprises the second interoperability indicator, and the second interoperability indicator comprises a second vendor identifier list; and a vendor identifier list comprised in the first operation identifier further comprises the second vendor identifier list.

73. A communication apparatus, comprising a unit or a module configured to perform the method according to any one of claims 1 to 72.

74. A communication apparatus, comprising one or more processors, wherein the one or more processors are configured to perform the method according to any one of claims 1 to 72.

75. A readable storage medium, wherein the readable storage medium comprises a program, and when the program is run on an apparatus, the apparatus is caused to perform the method according to any one of claims 1 to 72.

76. A computer program product, wherein the computer program product comprises a computer program or instructions, and when the computer program or the instructions are executed by a communication apparatus, the method according to any one of claims 1 to 72 is implemented.

77. A communication system, wherein the communication system comprises a first network element and a network repository function network element, wherein
the first network element is configured to perform the method according to any one of claims 6 to 19, the method according to any one of claims 26 to 35, the method according to any one of claims 39 to 49, or the method according to any one of claims 55 to 67; and
the network repository function network element is configured to perform the method according to any one of claims 20 to 25, the method according to any one of claims 36 to 38, the method according to any one of claims 50 to 54, or the method according to any one of claims 68 to 72.

78. A communication system, wherein the communication system comprises a first analytics function network element and a first model training function network element, wherein
the first model training function network element is configured to perform the method according to any one of claims 1 to 5; and
the first analytics function network element is configured to: send a model request message, wherein the model request message comprises an analytics identifier, and the model request message is used to request a model that provides a service corresponding to the analytics identifier; and receive information about a first model and first indication information, wherein the first indication information comprises at least one of the following: an identifier of a model training function network element that provides the information about the first model, an identifier of a first vendor, or a first interoperability indicator, the identifier of the first vendor indicates a vendor of a network element that provides the first model, and the first interoperability indicator corresponds to the analytics identifier.
